# FASCICULE DE BREVET EUROPEEN

(11) **EP 2 670 966 B1**
(45) Date de publication et mention de la délivrance du brevet: **17.06.2015**
(21) Numéro de dépôt: 12707841.8
(22) Date de dépôt: 01.02.2012
(51) Int. Cl.: F02M 25/00, F02M 37/22, B01D 37/02, F02M 37/00, B05B 7/28

(54) **DISPOSITIF DE DISTRIBUTION D'UN ADDITIF**
VORRICHTUNG ZUR ABGABE EINES ADDITIVS
DEVICE FOR DISPENSING AN ADDITIVE

(30) Priorité: 02.02.2011 FR 1100316; 17.06.2011 FR 1155310
(43) Date de publication de la demande: 11.12.2013
(73) Titulaire: Filtrauto, 78280 Guyancourt (FR); Rhodia Operations, 93306 Aubervilliers (FR)
(72) Inventeur: MONSALLIER, Guy, F-50400 Granville (FR); HARLE, Virginie, F-60300 Senlis (FR); HORBEZ, Dominique, F-95130 Franconville (FR); LALLEMAND, Michael, F-93200 Saint Denis (FR)
(74) Mandataire: Cabinet Plasseraud
(86) Numéro de dépôt international: PCT/FR2012/050219
(87) Numéro de publication internationale: WO 2012/104552

(56) Documents cités:
- EP-A1- 1 344 813
- EP-A2- 0 671 205
- EP-A2- 1 061 251
- WO-A1-01/10545
- WO-A1-97/19022
- WO-A1-03/053560
- WO-A1-2005/113279
- WO-A1-2008/116550
- WO-A1-2010/150040
- CA-A1- 2 270 093
- DE-C1- 4 028 253
- FR-A1- 2 312 062
- FR-A1- 2 668 203
- GB-A- 2 254 610
- US-A- 3 392 753
- US-A- 3 720 230
- US-A- 4 736 769
- US-A1- 2003 188 474
- US-A1- 2005 167 351
- US-B1- 6 223 526

## Description

### DOMAINE TECHNIQUE DE L'INVENTION

Le domaine technique de la présente invention est celui des moteurs à combustion interne, notamment les moteurs de véhicules automobiles, et plus particulièrement des dispositifs de distribution d'un additif liquide dans le circuit de circulation de carburant du moteur à combustion interne.

### ARRIERE-PLAN TECHNOLOGIQUE DE L'INVENTION

Les nouvelles technologies moteur, comme les moteurs diesel à système common rail et injection très haute pression de carburant, sont très performantes mais toutefois très sensibles à la qualité du carburant. Ainsi, il y a bénéfice à utiliser un carburant contenant des additifs améliorant sa qualité, notamment les additifs d'amélioration de la distribution du carburant dans le moteur, les additifs d'amélioration des performances du fonctionnement du moteur et les additifs d'amélioration de la stabilité du fonctionnement du moteur. La qualité des carburants commerciaux disponibles ne permet pas dans tous les cas d'alimenter le véhicule avec un carburant additivé de bonne qualité.

Par ailleurs, pour répondre aux nouvelles normes de contrôle des émissions des véhicules, notamment diesel, les véhicules sont progressivement équipés de Filtres à Particules (FAP). C'est déjà le cas en Europe depuis l'avènement de la norme Euro 5. Dans la plupart des cas, un catalyseur est utilisé pour aider à brûler les suies périodiquement et ainsi régénérer le FAP. Il ne suffit plus actuellement de régénérer efficacement le FAP arrêtant les fumées noires et lés suies. Aujourd'hui, l'enjeu majeur r est de réduire simultanément les émissions de CO₂ et d'oxydes d'azote NOx tout en conservant un véhicule fiable, performant et économique, notamment en présence de biocarburants. Le véhicule doit aussi être compétitif vis-à-vis des offres concurrente « essences » et « hybrides ". L'utilisation d'un additif de régénération des FAP, vectorisé par le carburant alimentant le moteur ou encore Fuel Borne Catalyst (FBC), s'est avéré répondre à de nombreux critères puisqu'il permet de régénérer le FAP plus rapidement et à plus basse température que la technologie concurrente appelée Catalysed Soot Filter (CSF). Par ailleurs, la technologie FBC n'a aucune contrainte sur le ratio NOx/suies ce qui est essentiel dans une optique d'intégration d'un catalyseur d'élimination des NÔx à horizon de la norme Euro 6 en 2014.

On a donc intérêt à équiper le véhicule d'un dispositif permettant d'introduire au carburant un additif d'aide à la régénération du FAP et/ou des additifs carburants améliorant la qualité du carburant et/ou le fonctionnement du moteur et/ou sa durabilité.

On sait qu'il existe des systèmes permettant d'introduire dans le carburant de tels additifs, notamment les additifs catalytiques FBC d'aide à la régénération des FAP. Ces systèmes reposent généralement sur un réservoir de grande taille de 2 à 3 litres minimum de volume renfermant la réserve d'additif et qu'il faut implanter dans des zones proches du réservoir à carburant.

Les stratégies actuelles de dosage d'additif font aussi appel à des pompes doseuses de haute précision, qu'il faut commander, via une unité électronique (ou ECU) additionnelle et dédiée. Ce dispositif de dosage doit être géré de manière fine afin d'assurer une teneur en additif dans le carburant suffisante pour permettre une bonne régénération du FAP, mais pas trop excessive pour éviter l'encrassement prématuré du FAP via les résidus minéraux de régénération du FAP qui restent collectés en son sein. Classiquement lorsque le niveau de carburant augmente dans le réservoir, suite à l'ajout de carburant, le calculateur indique à la pompe la quantité d'additif à injecter dans le réservoir de façon à maintenir une concentration en additif constante dans le carburant du réservoir.

Ces pompes doseuses sont d'une extrême précision et leur coût est loin d'être négligeable dans l'aspect économique global. De même, la gestion ECU du système intervient aussi de manière importante dans le coût du système complet.

L'utilisation d'une telle stratégie implique aussi de bien asservir le système de dosage et de bien vérifier son état de fonctionnement, ce qui reste particulièrement intrusif dans la gestion des modes de défaut du véhicule.

En termes de maintenance, le remplissage du réservoir est plutôt difficile et s'effectue à travers une connectique adaptée entre les besoins de remplissage et le réservoir d'additif.

Les véhicules diesel du groupe PSA sont par exemple équipés d'un tel dispositif.

Dans certaines zones géographiques, comme les pays émergeants, il est difficile de garantir que le réservoir sera bel et bien rempli au cours de la durée de vie du véhicule. Il est donc nécessaire de s'affranchir de cet aléa qui peut nuire à l'image du constructeur automobile.

Il est parfois nécessaire d'introduire dans le carburant des véhicules automobiles des additifs destinés à changer les qualités intrinsèques du carburant ou à agir dans le circuit de distribution de carburant ou après la combustion. Il s'agit par exemple d'agents antifongiques, d'additifs de lubrification, d'additifs détergents, d'agents antigel ou encore d'additifs qui ont une fonction d'aide à la régénération des filtres à particules, tels que les FBC.

Ces additifs peuvent être ajoutés au carburant lors du remplissage du réservoir de carburant, dispensé de manière diffuse et continue dans le circuit de distribution de carburant ou encore injectés par intermittence, en fonction de paramètres spécifiques qui peuvent par exemple être la température du carburant, la consommation instantanée ou moyenne de carburant, le régime du moteur ou des intervalles de temps.

On connait déjà le brevet FR2668203 qui divulgue l'introduction d'un additif de régénération de filtre à particule dans le réservoir de carburant lors du remplissage de ce dernier. Cette solution technique présente l'inconvénient de nécessiter un réservoir d'additif de volume important ainsi qu'un système électronique de mesure du remplissage du réservoir de carburant. De plus cette solution technique augmente le poids du véhicule, donc sa consommation de carburant.

On connait également les brevets EP1061251 et US7153422 qui divulguent un filtre à carburant comportant un réservoir d'additif, ce dernier étant diffusé dans le circuit de distribution du carburant. Cette solution technique présente l'inconvénient de la dissolution ou dilution de l'additif par le carburant introduit dans le réservoir d'additif, ce qui ne permet pas de maîtriser la concentration de l'additif diffusé dans le carburant.

Le document CA 2 270 093 A1 décrit un dispositif de distribution d'un additif selon le préambule de la revendication 1. Les documents US 3 392 753 A et US 4 736 769 A décrivent des dispositifs de distribution d'un additif comprenant une paroi mobile et étanche entre une enceinte d'additif et un réservoir d'additif.

### DESCRIPTION GENERALE DE L'INVENTION

C'est donc l'objet de l'invention que de remédier à ces problèmes technique en proposant un dispositif de distribution d'un additif liquide de faible encombrement et dont la composition de l'additif liquide ne subirait aucune variation significative au cours du temps.

La présente demande a donc pour objet un dispositif de distribution d'un additif liquide dans un circuit de circulation de carburant pour moteur à combustion interne, ledit circuit assurant la circulation du carburant entre l'intérieur d'un réservoir de carburant et le moteur, le dispositif comportant :
- un réservoir d'additif liquide permettant de diffuser un additif dans le circuit de circulation de carburant au moyen d'un canal de distribution,
- une enceinte d'additif communiquant avec le circuit de circulation de carburant, et
- au moins une paroi mobile et étanche entre ladite enceinte d'additif et le réservoir d'additif assurant d'une part une séparation étanche et d'autre part maintenant une pression identique entre l'additif dans le réservoir d'additif et le carburant dans l'enceinte d'additif.

Selon une caractéristique de l'invention, le réservoir d'additif se présente sous la forme d'une poche souple et en ce que ladite poche souple constitue la paroi mobile et étanche.

Selon une autre caractéristique de l'invention, la paroi mobile et étanche est réalisée par une membrane.

Selon encore une autre caractéristique de l'invention, la paroi mobile et étanche est réalisée par un piston.

Selon une autre caractéristique de l'invention, le dispositif comporte un orifice d'entrée de carburant, un orifice de sortie de carburant, un orifice de distribution d'additif et un moyen de génération de différence de pression entre l'orifice d'entrée ou de sortie de carburant et l'orifice de distribution d'additif. Ce moyen de génération de différence de pression est préférentiellement un moyen générateur d'une dépression entre l'orifice de distribution d'additif et l'orifice d'entrée ou de sortie de carburant, l'orifice de distribution d'additif étant agencé au niveau de ce moyen générateur d'une dépression.

Selon une autre caractéristique de l'invention, le moyen générateur d'une dépression se présente sous la forme d'un diaphragme ou d'un venturi.

Selon une autre caractéristique de l'invention, le moyen de génération de différence de pression se présente sous la forme d'un élément filtrant.

Selon une autre caractéristique de l'invention, le dispositif comporte un canal de distribution de l'additif et un moyen d'obturation totale ou partielle du canal de distribution de l'additif.

Selon une autre caractéristique de l'invention, le moyen d'obturation du canal de distribution de l'additif est un moyen électromécanique.

Selon une autre caractéristique de l'invention, le dispositif de distribution d'additif comporté un dispositif de filtration du carburant comportant au moins un élément filtrant.

Selon une autre caractéristique de l'invention, l'élément filtrant est de forme annulaire et le réservoir d'additif est disposé de manière concentrique à l'intérieur dudit élément filtrant.

Selon une autre caractéristique de l'invention, l'élément filtrant est de forme annulaire et le réservoir d'additif est disposé de manière concentrique à l'extérieur de l'élément filtrant.

Selon une autre caractéristique de l'invention, l'élément filtrant et le réservoir d'additif sont superposés axialement.

Selon une autre caractéristique de l'invention, l'élément filtrant est traversé par le carburant, délimitant un côté amont, situé en amont de l'élément filtrant, où circule le carburant non filtré et un côté aval, disposé entre l'élément filtrant et le moteur à combustion, où circule le carburant filtré et en ce que l'additif est diffusé du côté amont.

Selon une autre caractéristique de l'invention, l'élément filtrant est traversé par le carburant, délimitant un côté amont, situé en amont de l'élément filtrant, où circule le carburant non filtré et un côté aval, disposé entre l'élément filtrant et le moteur à combustion, où circule le carburant filtré et en ce que l'additif est diffusé du côté aval.

Selon une autre caractéristique de l'invention, l'additif est diffusé dans la ligne de retour de carburant du moteur à combustion interne, en aval du système d'injection et assurant le retour de carburant excédentaire jusqu'au réservoir de carburant.

Selon une autre caractéristique de l'invention, la paroi mobile est disposée entre le réservoir d'additif et le côté amont.

Selon une autre caractéristique de l'invention, la paroi mobile est disposée entre le réservoir d'additif et le côté aval.

Selon une particularité, tout ou partie du dispositif de distribution d'additif est disposé dans le réservoir de carburant (l'enceinte d'additif étant ainsi placée dans le réservoir de carburant). Eventuellement, le circuit de circulation de carburant (avec lequel communique l'enceinte d'additif) assure la circulation retour du carburant du moteur jusqu'à l'intérieur du réservoir de carburant.

Selon une autre caractéristique de l'invention, l'additif est un additif de régénération des filtres à particules se présentant sous forme d'une dispersion colloïdale de particules à base d'une terre rare et/ou d'un métal choisi dans les groupes IIA, IVA, VIIA, VIII, IB, IIB, IIIB et IVB de la classification périodique.

Selon une autre caractéristique de l'invention, l'additif se présente sous forme d'une dispersion colloïdale.

Selon une autre caractéristique de l'invention, les particules de la dispersion colloïdale sont à base de cérium et/ou de fer.

Selon une autre caractéristique de l'invention, l'additif est une combinaison d'une dispersion colloïdale de particules qui comprend une phase organique et au moins un agent amphiphile et d'un détergent à base d'un sel d'ammonium quaternaire.

Selon une autre caractéristique de l'invention, l'additif est une combinaison d'un additif détergent et d'un additif de lubrification.

L'invention concerne également un dispositif de distribution d'un additif liquide dans un circuit de circulation de carburant pour moteur à combustion interne, localisé dans le réservoir à carburant, comportant un réservoir d'additif liquide permettant de diffuser un additif dans le circuit de circulation de carburant au moyen d'un canal de distribution , une enceinte d'additif communiquant avec le circuit de circulation de carburant et au moins une paroi mobile et étanche entre ladite enceinte d'additif et le réservoir d'additif assurant d'une part une séparation étanche et d'autre part maintenant une pression identique entre l'additif dans le réservoir d'additif et le carburant dans l'enceinte d'additif et au moins un élément filtrant, caractérisé en ce qu'il comporte d'une part une tête de diffusion destinée à être montée de manière permanent sur le circuit de circulation de carburant et comportant un canal de distribution de l'additif dans le circuit de circulation de carburant et d'autre part une cartouche comportant l'élément filtrant, le réservoir d'additif et la paroi mobile et étanche, ladite cartouche étant montée de manière amovible sur la tête de diffusion.

Un avantage de la présente invention réside dans le fait qu'elle permet d'intégrer un diffuseur d'additif aussi bien lors de la conception de nouveaux moteurs que dans des moteurs déjà existants.

Un autre avantage de l'invention réside dans la possibilité de pouvoir diffuser de manière précise une quantité définie d'additif.

Un autre avantage de l'invention réside dans la possibilité de pouvoir diffuser de multiples types d'additif quelle que soit leur composition et/ou quelles que soient leurs propriétés physico-chimiques.

Un autre avantage de l'invention réside dans la capacité de pouvoir piloter la diffusion de l'additif en fonctions de différents paramètres.

Un autre avantage de l'invention réside dans sa compacité.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une représentation schématique d'un dispositif de distribution d'un additif dans un circuit de circulation de carburant pour moteur à combustion interne selon l'invention,
- la figure 2 est une vue en coupe illustrant un distributeur d'additif liquide selon un premier mode de réalisation de l'invention,
- les figures 3 à 5 sont des graphiques illustrant l'évolution de concentration d'un additif dans le carburant selon différents paramètres,
- les figures 6 à 13 sont des vues en coupe illustrant d'autres modes de réalisation de l'invention consistant à intégrer le distributeur d'additif liquide dans un filtre à carburant, et
- la figure 14 est une représentation schématique d'un dispositif de distribution d'un additif dans un circuit de circulation de carburant pour moteur à combustion interne selon l'invention.

### DESCRIPTION DES MODES DE REALISATION PREFERES DE L'INVENTION

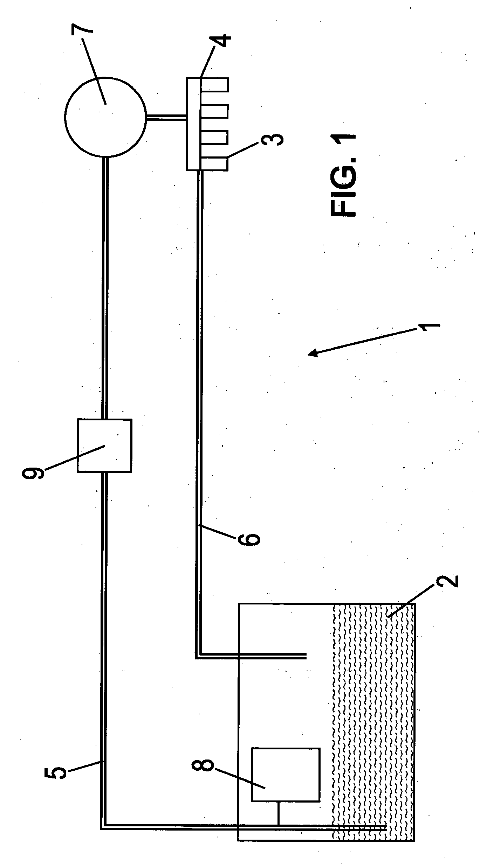

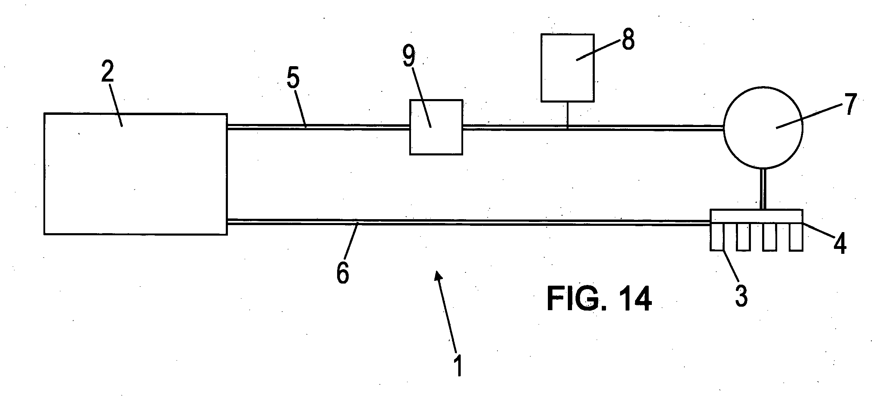

La figure 1 représente schématiquement un circuit 1 de circulation de carburant pour moteur à combustion interne. Classiquement, le circuit 1 de circulation de carburant est disposé entre un réservoir 2 de carburant et la rampe haute pression 4 (également appelée « common rail ») et assure la circulation du carburant entre l'intérieur du réservoir et la rampe haute pression. Le circuit d'alimentation comporte un filtre 9 destiné à filtrer le carburant et une pompe haute pression 7. La pompe haute pression 7 et la rampe haute pression 4 constituent le système d'injection du carburant. Un premier conduit 5, dit « ligne d'alimentation », assure la circulation de carburant depuis l'intérieur du réservoir 2 vers la rampe haute pression 4 et un second conduit 6, dit « ligne retour » assure la circulation de carburant depuis le système d'injection jusqu'à l'intérieur du réservoir 2. Le carburant est donc pompé dans le réservoir 2, puis filtré dans le filtre 9 est envoyé sous pression, par l'intermédiaire de la pompe 7, dans la rampe haute pression 4 puis une partie est dirigée vers les injecteurs 3 du moteur et une autre partie retournée jusqu'à l'intérieur du réservoir 2 par la ligne retour 6. Une partie du carburant peut également être envoyé de la pompe haute pression 7 vers la ligne retour 6. Le circuit 1 de circulation de carburant comporte également un dispositif 8 de distribution d'un additif liquide selon l'invention dont le fonctionnement sera décrit par la suite. A titre illustratif et non limitatif, le dispositif 8 pourra notamment être disposé soit sur la ligne d'alimentation 5 et dans ce cas à l'intérieur du réservoir 2, comme indiqué sur la figure 1, ou encore à l'extérieur de celui-ci comme montré sur la figure 14, soit sur celle de retour 6 et dans ce cas le dispositif 8 peut être prévu à l'intérieur ou à l'extérieur du réservoir de carburant 2.

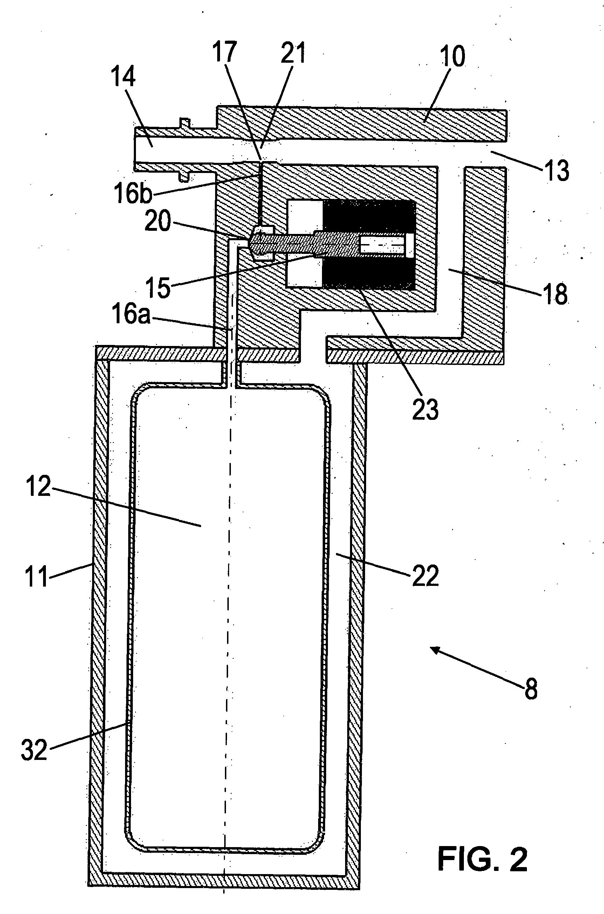

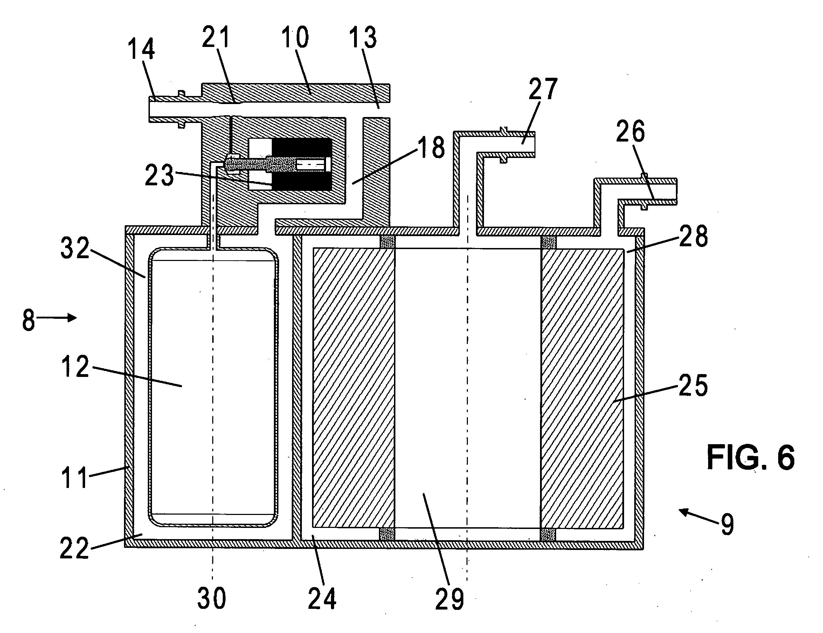

La figure 2 représente, en vue en coupe, un premier mode de réalisation de l'invention. Dans cet exemple de réalisation, le dispositif 8 de distribution d'un additif comporte une tête 10 et une cartouche remplaçable 11 formant une enceinte d'additif 22 dans laquelle est disposé un réservoir 12 d'additif liquide. La tête 10 comporte un orifice 13 d'entrée de carburant, un orifice 14 de sortie du carburant, un venturi 21 situé entre les orifices d'entrée et de sortie du carburant, un conduit 18 assurant un passage de carburant entre l'orifice d'entrée du carburant et l'enceinte d'additif 22 à l'intérieur de la cartouche remplaçable 11 et un canal 16 de distribution d'additif assurant le passage de l'additif liquide du réservoir 12 vers un orifice 17 de diffusion d'additif dans le venturi 21. Dans cet exemple de réalisation, le canal 16 de distribution d'additif présente une première portion 16a et une seconde portion 16b de section réduite. Un actionneur 15, constitué d'un doigt 20 et d'une bobine 23 permet d'obturer le passage entre les portions 16a et 16b du canal de distribution d'additif. Dans cet exemple de réalisation (ainsi que dans les figures 6 à 10), le réservoir 12 d'additif se présente sous la forme d'une poche souple 32 constituant une paroi mobile et étanche entre le carburant présent dans l'enceinte d'additif 22 et l'additif à l'intérieur du réservoir 12.

Le fonctionnement de l'invention est le suivant :
Le dispositif 8 de distribution d'un additif est connecté à la ligne d'alimentation ou à la ligne retour de carburant. Le carburant circule donc de manière continue entre les orifices 13 et 14 d'entrée et de sortie du carburant.
Le venturi 21, qui constitue un moyen connu de génération de différence de pression, génère une dépression entre l'orifice 17 de distribution d'additif et l'orifice 13 d'entrée de carburant.

L'enceinte d'additif 22, communiquant par le conduit 18 avec l'orifice 13 d'entrée de carburant, est rempli de carburant à la même pression que le carburant circulant à l'orifice 13 d'entrée de carburant, la poche souple 32, constituant la paroi mobile et étanche du réservoir d'additif maintient une pression identique entre l'additif dans le réservoir d'additif 12 et le carburant dans l'enceinte 22.

La pression dans le réservoir 12 d'additif est donc supérieure à la pression régnant au niveau de l'orifice 17 de diffusion d'additif, ce qui contraint l'additif à se déplacer du réservoir 12 vers l'orifice 17 de diffusion d'additif puis à se diffuser dans le carburant circulant dans le venturi 21 et donc dans le circuit de circulation de carburant. L'actionneur 15 permet d'empêcher totalement ou partiellement la circulation de l'additif. On comprend, comme cela est bien visible sur les figures 1-2 notamment, que l'orifice 17 de diffusion d'additif permet de diffuser l'additif dans une conduite du circuit 1 de circulation de carburant, c'est-à-dire dans du carburant qui circule entre l'intérieur du réservoir 2 de carburant et le moteur. Contrairement à une diffusion d'additif directement dans le réservoir de carburant, on comprend que ce mode de diffusion ne requiert aucune mesure particulière du niveau de remplissage du réservoir de carburant.

Dans cet exemple de réalisation, l'actionneur 15 illustre un moyen électromécanique d'obturation totale ou partielle du canal de distribution de l'additif. L'utilisation d'un tel moyen est cependant facultative et on pourra évidemment réaliser l'invention sans obturer le canal de distribution d'additif ou à l'aide d'autres moyens d'obturation du canal de distribution d'additif, par exemple un thermoclapet, un clapet « parapluie », un clapet anti-retour ou un clapet à commande hydraulique.

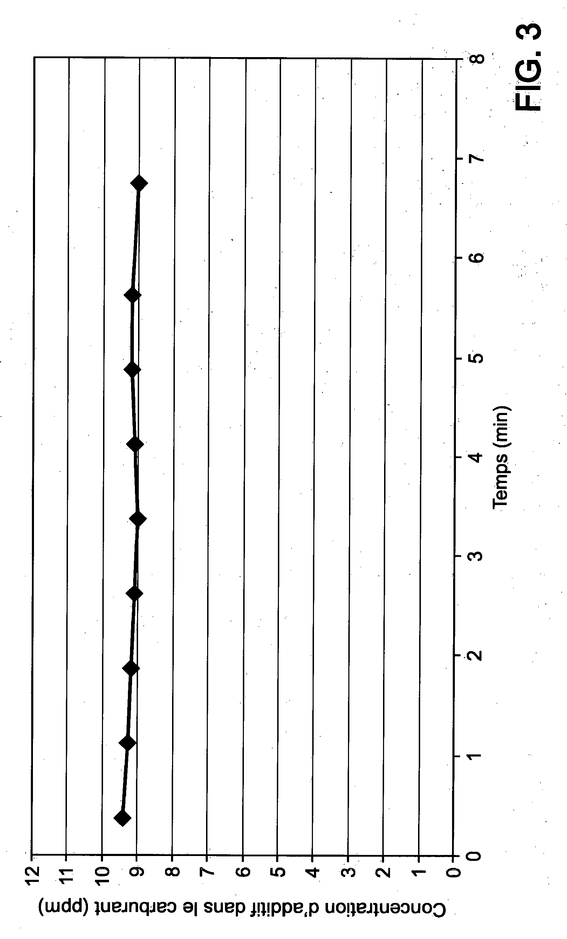

Les figures 3 à 5 ont été réalisées en diffusant un additif constitué d'une suspension colloïdale de particules à base de fer telle que la dispersion C dé l'exemple 3 de la demande de brevet WO 2010/150040 dans un carburant à l'aide d'un dispositif de distribution d'un additif selon l'invention et en mesurant la concentration de cet additif dans le carburant. L'élément fer est un marqueur de l'additivation se présentant sous la forme d'une suspension colloïdale et dont la concentration est facile à mesurer dans le carburant par toute technique connue comme la spectroscopie de Fluorescence X. Il va de soi que l'invention ne se limite pas à l'utilisation du fer en suspension colloïdale et concerne tout type d'additif, comme cela est indiqué dans les autres sections de la présente description.

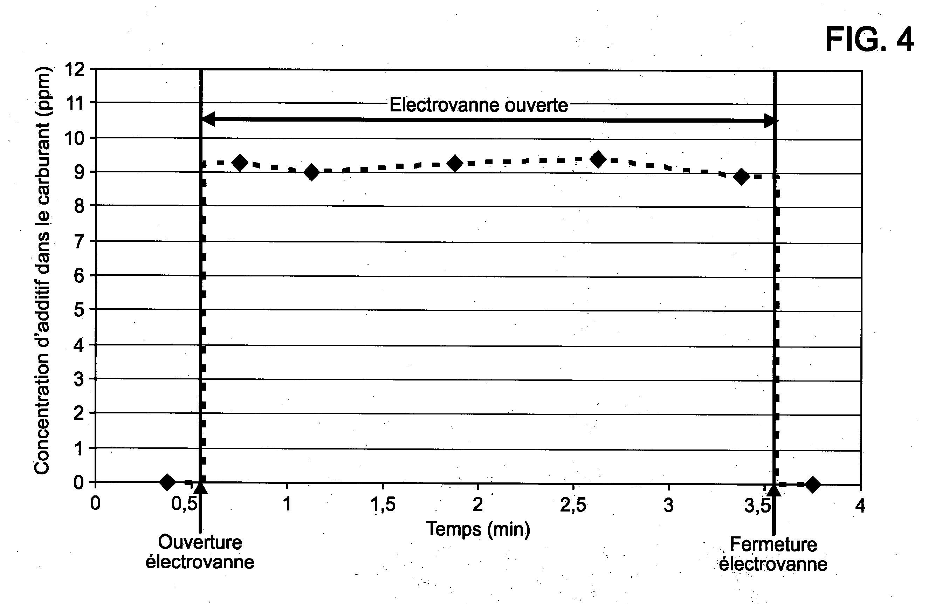

Les figures 3 et 4 illustrent l'évolution de la concentration d'un additif dans un carburant, en aval du dispositif selon l'invention. Dans cet exemple de réalisation, on fait circuler du carburant, sans recirculation, avec un débit de 160 litres/heure dans un dispositif comme celui décrit dans la figure 2. La section d'entrée de la ligne carburant 13 est de 6 mm et comprend un venturi 21 de 5,06 mm de diamètre ce qui soumet l'additif à une différence de pression de 16 mbar par rapport à la pression du carburant. L'additif est distribué dans le carburant au moyen d'un canal 16b de distribution d'additif d'une longueur de 21 mm et d'un diamètre de 0.6 mm.

La figure 3 illustre la concentration d'additif lors d'une une diffusion continue et la figure 4 illustre la concentration d'additif lors d'une une diffusion discontinue et pilotée par une électrovanne 15. On peut observer sur la figure 3 que la concentration en fer dans le carburant est stable sur la durée de l'essai ce qui traduit une additivation constante. La figure 4 indique par ailleurs que l'électrovanne permet bien de supprimer toute additivation lorsqu'elle est fermée. Lorsqu'elle est ouverte, on observe que la concentration instantanée d'additif dans le carburant est sensiblement identique à celle mesurée lors de la diffusion continue (figure 3). Il apparait ainsi que l'utilisation d'une électrovanne permet avantageusement de diffuser l'additif de manière discontinue et de piloter la diffusion d'additif, par exemple en effectuant un crénelage. Le profil d'additivation peut être piloté aussi bien en durée d'additivation (durée d'additivation et durée de non additivation) qu'en fréquence d'additivation (fréquence d'alternance des périodes d'additivation ou de non additivation). Le pilotage peut être défini à la conception ou bien être variable dans le temps ou en fonction de paramètres externes comme certains paramètres moteur par exemple.

Ce dispositif permet également de supprimer l'additivation pendant les périodes d'arrêt ou de stockage du véhicule.

En fonction du type d'additif, du taux d'additif visé ou d'autres paramètres comme le profil d'additivation, on aura avantage à ajuster les dimensions du système notamment celles du venturi 21 et du canal de diffusion 16.

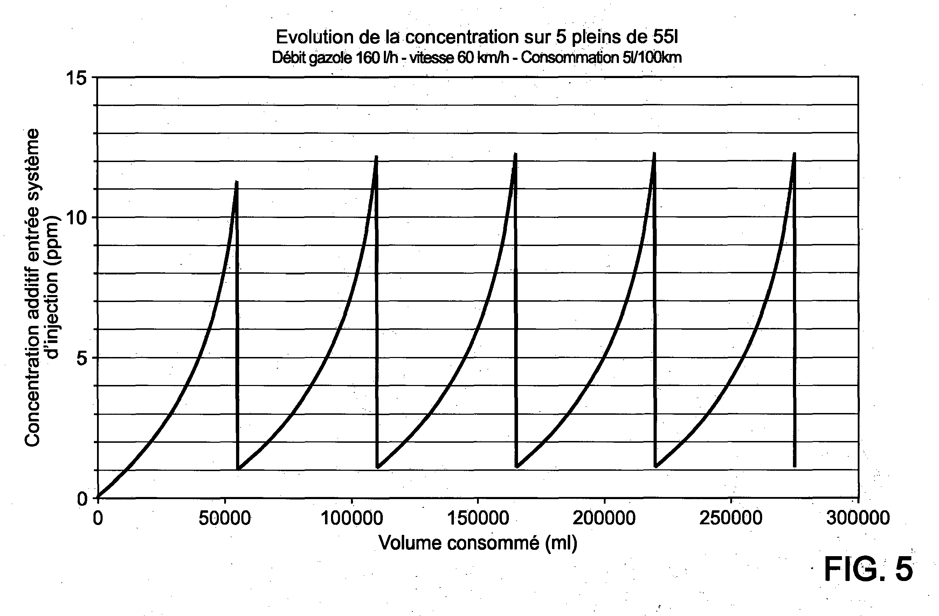

La figure 5 illustre l'évolution de concentration d'additif d'un carburant dans une boucle de recirculation. Cette figure simule l'évolution de la concentration en additif, toujours au travers de la concentration en fer, dans le carburant d'un réservoir d'un véhicule en fonction du volume de carburant consommé (ml). Le carburant circule à un débit de 160 l/h depuis le réservoir en passant sur le dispositif décrit pour la figure 3 puis revient au réservoir et l'on considère une consommation en carburant par le véhicule de 3 l/h (60 km/h pour une consommation de 5l de carburant / 100 km). La quantité de carburant initial dans le réservoir est de 60 litres et l'on a considéré un remplissage de réservoir par 55 litres lorsque le réservoir atteint un niveau bas de 5 litres. On observe que pour une injection constante d'additif correspondant à celle de la figure 3 grâce au dispositif selon l'invention, la concentration en fer se stabilise entre 1 et 12 ppm de fer ce qui permet de délivrer une quantité moyenne contrôlée d'additif au carburant.

Les figures 6 à 13 illustrent un dispositif selon l'invention comportant au moins un élément filtrant.

La figure 6 illustre une première variante de réalisation de l'invention. Dans cette variante de réalisation, la tête 10 est identique à celle représentée sur la figure 2 et le réservoir d'additif 12 est également réalisé par une poche souple 32. La cartouche 11 comporte une paroi étanche 30 délimitant, en coopération avec les parois de la cartouche, d'une part l'enceinte d'additif 22 dans laquelle est disposé le réservoir 12 d'additif liquide et d'autre part une enceinte de filtration 24 dans laquelle est disposé un élément filtrant 25. Ainsi, le réservoir d'additif 12 et l'élément filtrant 25 sont disposés cote à cote mais séparés par la paroi étanche 30. L'élément filtrant 25 est de forme annulaire et est traversé par le carburant. L'élément filtrant 25 délimite dans l'enceinte de filtration 24 d'une part une zone de carburant non filtré, ou « côté amont 28», située entre l'intérieur du réservoir 2 (non représenté sur cette figure) de carburant et l'élément filtrant 25, où circule le carburant non filtré et une zone de carburant filtré, ou « côté aval 29», disposée entre l'élément filtrant 25 et le moteur à combustion (non représenté sur cette figure), où circule le carburant filtré. Un tel mode de réalisation permet avantageusement d'assurer indépendamment les fonctions de filtration du carburant et de distribution de l'additif liquide. Ainsi, le filtre à carburant est connecté à la ligne d'alimentation 5 alors que la distribution d'additif peut être effectuée aussi bien au niveau de la ligne d'alimentation 5 qu'au niveau de la ligne retour 6.

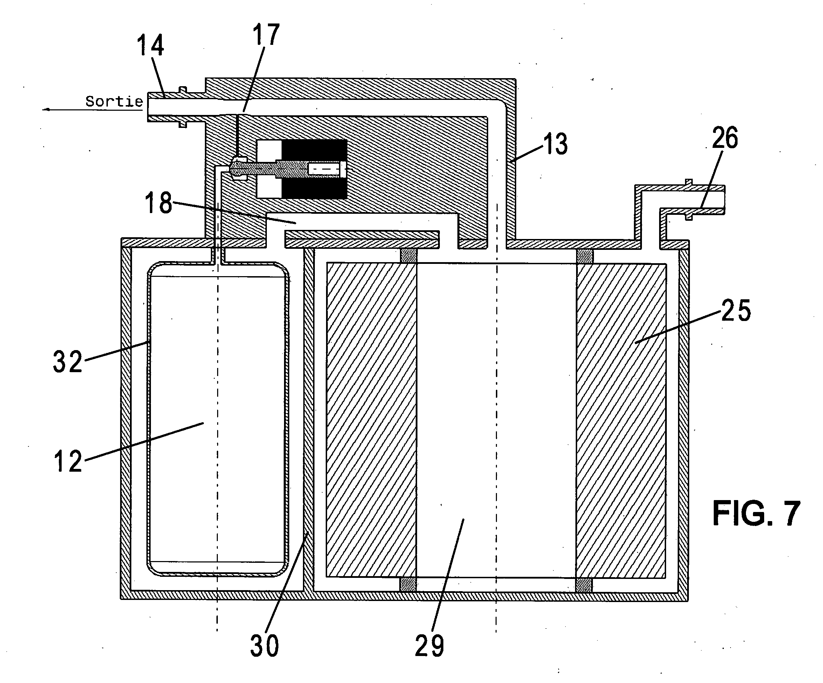

La figure 7 illustre une seconde variante de réalisation de l'invention. Dans cette variante de réalisation, le réservoir d'additif 12 et l'élément filtrant 25 sont disposés cote à cote, séparés par la paroi 30 mais le canal de communication 18 permet au carburant de circuler directement entre le côté aval 29 de l'élément de filtration et l'enceinte d'additif 22 dans laquelle est disposé le réservoir 12 d'additif liquide. L'orifice 13 d'entrée de carburant de la tête 10 est directement relié au côté aval 29 de l'élément de filtration. L'orifice 17 de diffusion d'additif est disposé au niveau de la ligne d'alimentation en carburant, entre le côté aval 29 de l'élément filtrant et le moteur à combustion interne (non représenté). Ainsi, la paroi mobile 32 est disposée entre le réservoir d'additif 12 et le côté aval 29 de l'élément filtrant et l'additif est diffusé du côté aval 29 de l'élément de filtration.

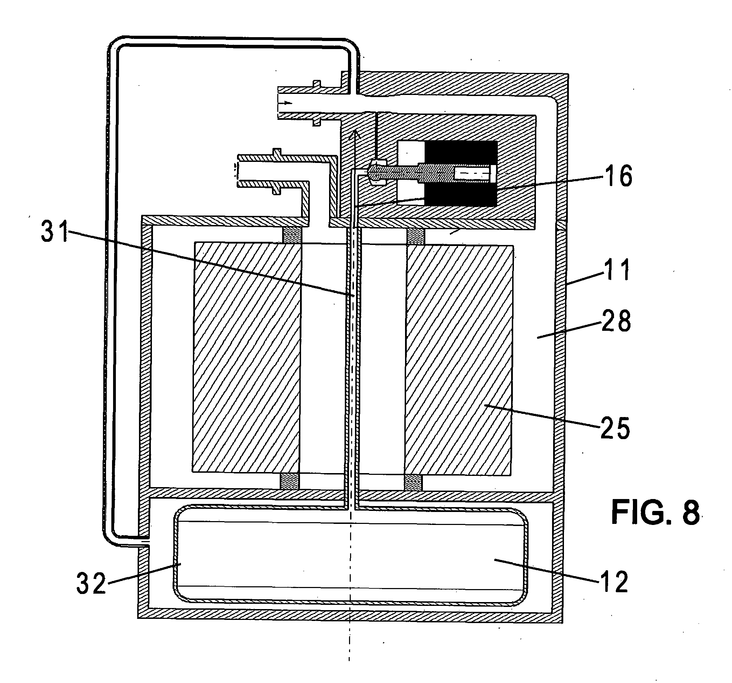

La figure 8 illustre une autre variante de réalisation de l'invention. Dans cette variante de réalisation, le réservoir d'additif 12 et l'élément filtrant 25 sont superposés axialement dans la cartouche 11, un canal de communication permet au carburant de circuler entre le côté amont de l'élément de filtration et l'enceinte d'additif 22 dans laquelle est disposé un réservoir 12 d'additif liquide. Le réservoir d'additif 12 est relié au canal 16 de distribution d'additif au moyen d'une tubulure 31 dont l'extrémité supérieure coopère avec l'extrémité inférieure de la première portion 16a du canal 16 de distribution d'additif. La tubulure 31 est ici coaxiale avec l'élément filtrant annulaire 25 et la traverse de manière étanche en son centre. Dans cet exemple de réalisation la tubulure 31 est solidaire du réservoir d'additif 12. L'orifice 17 de diffusion d'additif est disposé au niveau de la ligne d'alimentation en carburant, entre le côté amont 28 de l'élément filtrant et l'intérieur du réservoir 2 de carburant (non représenté). Ainsi, la paroi mobile 32 est disposée entre le réservoir d'additif 12 et le côté amont 28 de l'élément filtrant et l'additif est diffusé du côté amont 28 de l'élément filtrant.

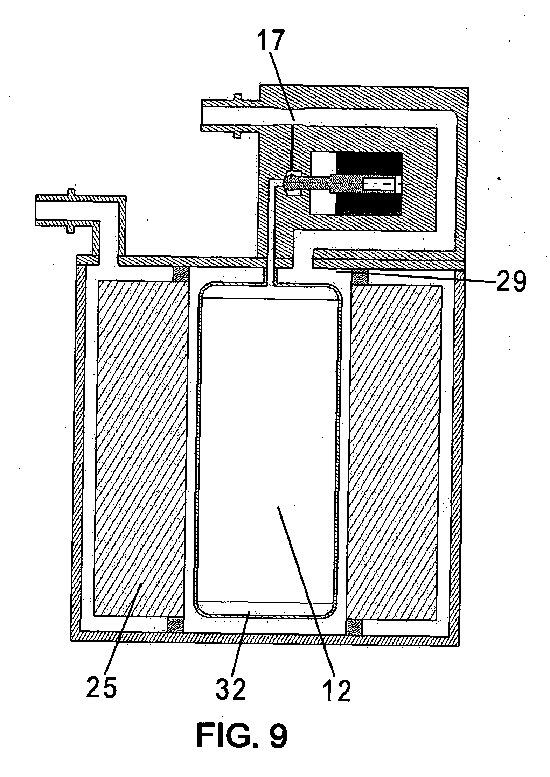

La figure 9 illustre encore une autre variante de réalisation de l'invention. Dans cette variante de réalisation, l'élément filtrant 25 est de forme annulaire et le réservoir d'additif 12 est disposé de manière concentrique à l'intérieur dudit élément filtrant 25. Le carburant circule, dans cet exemple, radialement de l'extérieur vers l'intérieur de l'élément filtrant 25 et l'orifice 17 de diffusion d'additif est disposé au niveau de la ligne d'alimentation en carburant, entre le côté aval 29 de l'élément filtrant et le moteur à combustion interne (non représenté). Ainsi, la paroi mobile 32 est disposée entre le réservoir d'additif 12 et le côté aval 29 de l'élément filtrant et l'additif est diffusé du côté aval 29 de l'élément de filtration.

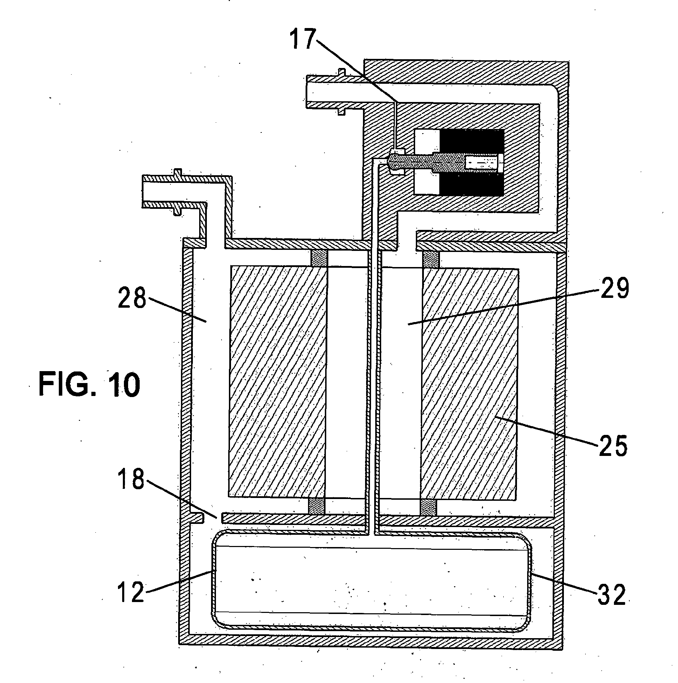

La figure 10 illustre une autre variante de réalisation de l'invention. Dans cette variante de réalisation, le réservoir 12 d'additif et l'élément filtrant 25 sont superposés axialement, séparés par une paroi mais un canal de communication 18 permet au carburant de circuler entre le côté amont 28 de l'élément filtrant 25 et l'enceinte d'additif 22 dans laquelle est disposé le réservoir 12 d'additif liquide. L'orifice 17 de diffusion d'additif f est disposé au niveau de la ligne d'alimentation en carburant, entre le côté aval 29 de l'élément filtrant et le moteur à combustion interne (non représenté). Ainsi, la paroi mobile 32 est disposée entre le réservoir d'additif 12 et le côté amont 28 de l'élément filtrant 25 et l'additif est diffusé du côté aval 29 de l'élément filtrant. Dans ce mode de réalisation, le moyen de génération de différence de pression est réalisé par l'élément filtrant 25.

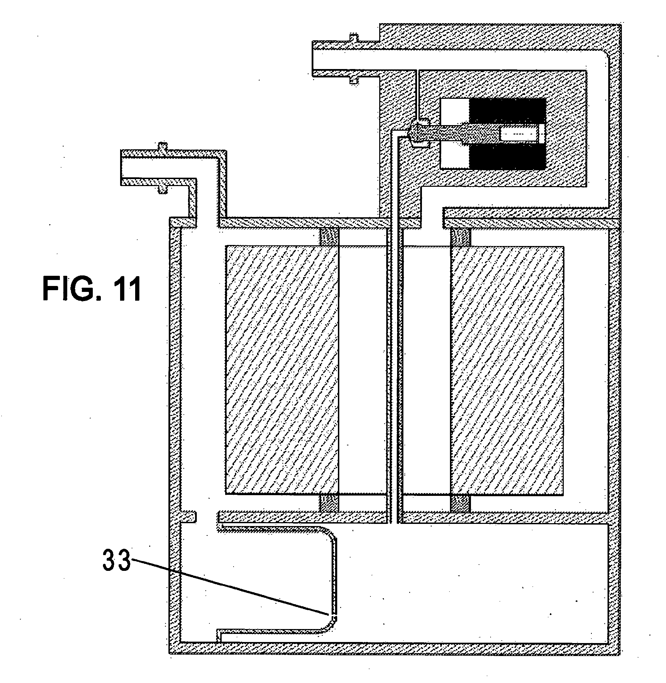

La figure 11 est une variante du dispositif illustré par la figure 10 dans laquelle la paroi mobile et étanche est réalisée par une membrane 33.

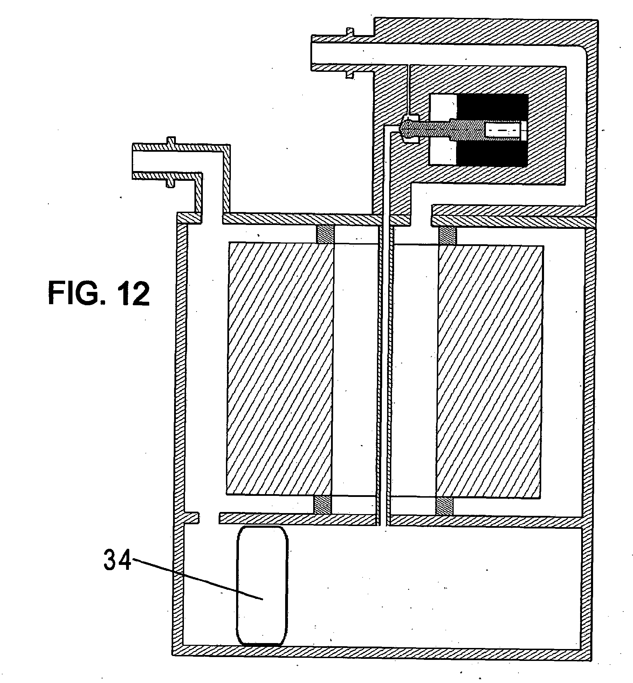

La figure 12 est une variante du dispositif illustré par la figure 10 dans laquelle la paroi mobile et étanche est réalisée par un piston 34.

Ces modes de réalisation ont été cités à titre illustratifs et ne sont en aucun cas limitatifs. L'invention pourra être réalisée sous d'autres variantes. Par exemple, le moyen de génération de différence de pression pourra se présenter sous la forme d'un diaphragme ou le réservoir d'additif pourra être disposé de manière concentrique à l'extérieur de l'élément filtrant.

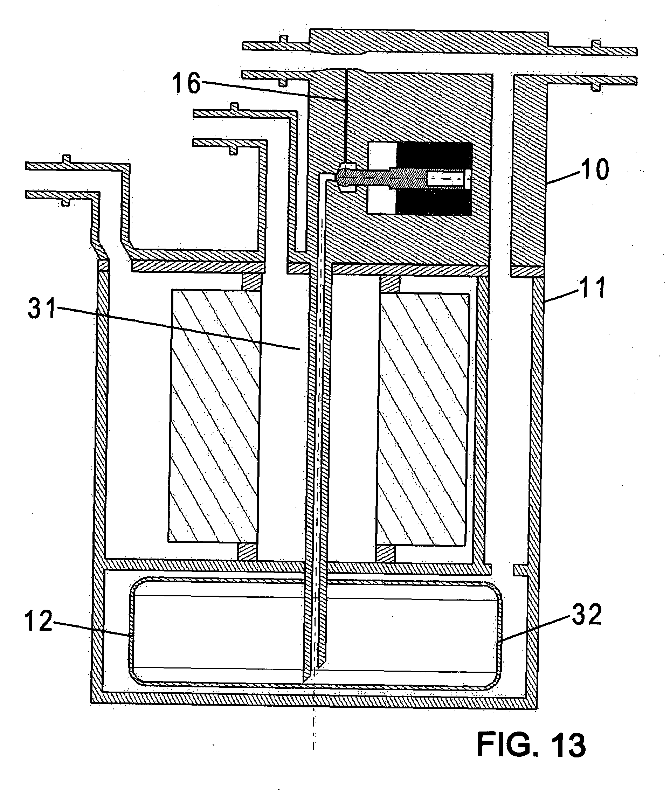

La figure 13 illustre encore une autre variante de réalisation de l'invention. Dans cette variante de réalisation, l'additif est diffusé dans la ligne de retour 6 de carburant du moteur à combustion interne, en aval du système d'injection et vers le réservoir 2 de carburant (non représenté sur la figure). Le dispositif de distribution d'un additif liquide ainsi illustré comporte d'une part une tête 10 de diffusion destinée à être montée de manière permanent sur le circuit de circulation de carburant et comportant un canal 16 de distribution de l'additif dans le circuit de carburant et d'autre part une cartouche 11 comportant un élément filtrant 25, un réservoir 12 d'additif et une paroi mobile et étanche 32, ladite cartouche 11 étant montée de manière amovible sur de la tête 10 de diffusion. Dans cet exemple de réalisation, la tubulure 31 permettant la circulation de l'additif du réservoir 12 d'additif vers le canal 16 de distribution est solidaire de la tête 10 et comporte une extrémité en biseau afin de percer la poche souple 32 lorsque la cartouche 11 est solidarisée de la tête 10.

Les exemples de réalisation illustrés par les figures 2 et 6 à 13 sont donnés à titre indicatif et ne sont nullement limitatifs. Le nombre d'exemples a été limité par les demanderesses afin de ne pas surcharger la demande. L'Homme du Métier comprendra que l'invention concerne également des modes de réalisations non représentés ici mais résultant de la combinaison de plusieurs modes précédemment décrits ou de la substitution d'une ou plusieurs caractéristiques d'une figure par les caractéristiques d'une autre figure.

Le dispositif de l'invention permet de véhiculer tout type d'additif contenu dans le carburant. Ces additifs, qui vont maintenant être décrits, peuvent être classés en deux catégories : d'une part ceux qui ont une fonction catalytique d'aide à la régénération des FAP, habituellement dénommés Fuel Borne Catalyst (FBC) et d'autre part ceux qui sont une fonction autre qu'une fonction catalytique.

Les additifs peuvent se présenter sous forme liquide ou solide. La forme liquide comprend tous les additifs constitués d'un liquide ou d'un mélange de liquides, en suspension colloïdale dans une base liquide, sous forme de gel dont la viscosité permet l'écoulement de l'additif ou encore d'un solide passant sous forme liquide lors d'une action de chauffage ou sous l'action d'une contrainte préalablement à l'additivation dans le carburant.

### Les FBC

Ces additifs sont idéalement liquides dans la plage de température de fonctionnement, comprise généralement entre 20 et 45°C mais ils peuvent aussi être sous une autre forme physique comme un gel ou encore un solide qui une fois en contact avec le carburant est solubilisé ou mis en suspension dans le carburant. Le cas de la suspension dans le carburant se présente notamment dans le cas des suspensions dites colloïdales qui seront décrites ultérieurement. Dans tous les cas, une fois le carburant additivé, celui-ci présente un aspect visuellement homogène. Ces additifs peuvent contenir tout type de catalyseur efficace pour catalyser la combustion des suies notamment le platine, le strontium, le sodium, le manganèse, le cérium, le fer et /ou leur combinaison.

La quantité d'additif dans le carburant est généralement au moins d'environ 1 ppm et au plus d'environ 100 ppm, cette quantité étant exprimée en masse d'élément additif métallique par rapport à la masse de carburant.

Ces additifs peuvent se présenter sous la forme d'un sel organométallique ou d'un mélange de sels organométalliques solubles ou dispersibles dans le carburant. Ces sels sont caractérisés en ce qu'ils comprennent au moins une partie métallique et une partie organique complexante généralement d'origine acide, le tout en suspension dans un solvant.

La partie organique de ce sel contient au moins un groupe hydrocarboné et au moins une partie complexante; chaque partie organique pouvant contenir un ou plusieurs motifs complexant. Cette partie complexante est généralement d'origine acide et peut être de type carboxylate, sulfonate, phosphonate, salicylates, naphténates ou phénates. Le groupe hydrocarboné peut être de type aliphatique saturé ou insaturé et comporté des motifs cycliques. Le nombre d'atomes de carbone de ce groupe est compris entre 6 à 200.

On préféra les sels d'acide carboxylique aliphatiques saturés, ramifiés ou non.

La partie métallique de ce sel peut se présenter sous forme ionique, sous forme de carbonate, sous forme d'hydroxyde, sous forme d'oxyde ou en mélange.

Les sels peuvent être surbasés c'est-à-dire qu'ils contiennent un excès d'espèces métal par rapport à la stoechiométrie acide/métal nécessaire à l'obtention du complexe.

Les sels organométalliques peuvent également être acides. Dans ce cas, ils contiennent un excès d'acide carboxylique par rapport à la stoechiométrie acide/métal nécessaire à l'obtention du complexe et ceux-ci jusqu'à contenir environ 20% d'acide libre qui n'a pas réagi.

Ces sels organométalliques peuvent aussi être neutres en ce qu'ils contiennent un rapport stoechiométrique de métal et de carboxylate.

Le solvant utilisé pour préparer ces solutions ou ces dispersions stables d'additif peut être une fraction de pétrole liquéfié, un hydrocarbure synthétique, un hydrocarbure oxygéné, un solvant alcoolique comme l'hexanol ou le 2-éthylhexanol. Des exemples typiques sont notamment le kérosène, le kérosène hydrotraité, les solvants paraffiniques et isoparaffiniques, les solvants naphténiques aliphatiques, les solvants aromatiques, des dimères et des oligomères du propylène, butène et analogues et leurs mélanges. Les produits commerciaux tels que "Solvesso", "Varsol", "Norpar" et "Isopar" conviennent. Ces solvants peuvent également contenir des groupes fonctionnels autres que le carbone et l'hydrogène. De préférence, le solvant a un point éclair supérieur à 20 °C, plus préférentiellement supérieure à 40°C, et de préférence supérieure à 55°C.

Ces sels peuvent être préparés à partir des dits acides et d'un sel métallique soluble ou dispersible dans l'eau.

Comme composé du fer, on peut citer à titre d'exemple les acétylacétonates ferreux et ferrique, le naphténate de fer, l'oléate de fer, l'octoate de fer, le stéarate de fer, le néodécanoate de fer tel que décrit dans la demande de brevet EP 1 344 813, les alcényl et alkyl succinates de fer et plus généralement les sels de fer des acides carboxyliques en C6-C24.

Comme composé du cérium on peut citer de même et à titre d'exemple les acétylacétonates de cérium, le naphténate de cérium, l'oléate de cérium, l'octoate de cérium, le stéarate de cérium, le néodécanoate de cérium, les alcényl et alkyl succinates de cérium et plus généralement les sels de cérium des acides carboxyliques en C6-C24.

Les additifs FBC peuvent aussi se présenter sous la forme d'un complexes organométallique ou d'un mélange de complexes organométalliques solubles ou dispersibles dans le carburant. Ces complexes sont caractérisés en ce qu'ils comprennent au moins une partie métallique et au moins deux parties organiques complexantes.

Il est en effet connu dans l'art antérieur que différents complexes organométalliques comme ceux décrits dans GB 2 254 610 sont efficaces pour l'élimination de particules issues de la combustion d'hydrocarbures liquides. Ces complexes présentent aussi d'autres avantages tels qu'une solubilité et dispersibilité élevée dans le combustible ou une bonne stabilité thermique.

La partie métallique de ce complexe se présente sous forme ionique dont la charge peut varier en fonction de la nature du métal.

La partie organique de ce complexe contient au moins un groupe hydrocarboné et au moins une partie complexante qui peut être le groupe hydrocarboné lui même. La partie complexante interagit avec le cation métallique via les doublets électroniques d'un hétéroatome choisi parmi O, S et N ou d'un groupe cyclique insaturé tel que les phényles ou les cyclopentadiènyles.

Dans le cas du fer, on préféra les complexes de type ferrocène. La partie ferrocène de ces complexes peut être substitué par des groupements de type alkyle, aryle, halogénure, hydroxy, nitro, alkoxy, cycliques, ester, voir par un groupement de type ferrocène comme décrit dans le brevet US 7 452 388.

Le solvant utilisé pour préparer ces solutions ou ces dispersions stables d'additif est de préférence un solvant organique dans lequel le complexe ou les complexes sont dissous. Les solvants organiques appropriés comprennent des solvants très aromatiques. Cependant, si on le souhaite un solvant non-aromatique ou faiblement aromatique peut être utilisé. Dans le cas de ces derniers, la solubilité absolue du complexe sera plus faible que dans les solvants très aromatiques, toutefois cette solubilité est généralement suffisante. Un solvant aromatique avec des systèmes aromatiques de 9 à 16 atomes de carbone, un point d'ébullition compris entre 170 et 295°C et une teneur en substance aromatique totale de plus de 98% en poids est particulièrement adapté. Par exemple, le PLUTOsol^{™} APF est un solvant adapté.

Selon une variante, les additifs FBC sont utilisés sous la forme d'une suspension ou dispersion colloïdale de nanoparticules par exemple d'oxyde ou d'oxyhydroxyde métallique, amorphe ou cristallisé.

L'expression « dispersion colloïdale» désigne dans la présente description tout système constitué de fines particules solides de dimensions colloïdales à base de l'additif, en suspension dans une phase liquide, lesdites particules pouvant, en outre, éventuellement contenir des quantités résiduelles d'ions liés ou adsorbés tels que par exemple des nitrates, des acétates, des citrates, des ammoniums ou des chlorures. Par dimensions colloïdales, on entend des dimensions comprises entre environ 1 nm et environ 500 nm. Les particules peuvent plus particulièrement présenter une taille moyenne d'au plus 250 nm environ, notamment d'au plus 100 nm, de préférence d'au plus 20 nm et encore plus préférentiellement d'au plus 15 nm. On notera que dans de telles dispersions, le composé de l'additif peut se trouver soit, de préférence, totalement sous la forme de colloïdes, soit sous la forme de colloïdes et partiellement sous la forme d'ions.

La granulométrie dont il est fait état ci-dessus et pour la suite de la description, sauf indication contraire, est déterminée par microscopie électronique à transmission (MET), de manière classique, sur un échantillon préalablement séché et déposé sur une membrane de carbone supportée sur une grille de cuivre.

Dans le cas des additifs FBC sous forme de dispersion colloïdale les particules peuvent être à base d'une terre rare et/ou d'un métal choisi dans les groupes IIA, IVA, VIIA, VIII, IB, IIB, IIIB et IVB de la classification périodique.

Par terre rare on entend les éléments du groupe constitué par l'yttrium et les éléments de la classification périodique de numéro atomique compris inclusivement entre 57 et 71.

La classification périodique des éléments à laquelle il est fait référence est celle publiée dans le Supplément au Bulletin de la Société Chimique de France n° 1 (janvier 1966).

Pour ces additifs susceptibles d'être utilisés sous forme d'une dispersion colloïdale, la terre rare peut être choisie plus particulièrement parmi le cérium, le lanthane, l'yttrium, le néodyme, le gadolinium et le praséodyme. Le cérium peut être choisi tout particulièrement. Le métal peut être choisi parmi le zirconium, le fer, le cuivre, le gallium, le palladium et le manganèse. Le fer peut être choisi tout particulièrement. Le fer peut être sous la forme d'un composé amorphe ou cristallisée.

On peut mentionner plus particulièrement aussi les dispersions colloïdales à base d'une combinaison de cérium et de fer.

Les dispersions colloïdales peuvent comprendre plus particulièrement :
- une phase organique,
- des particules de l'additif, du type décrit ci-dessus (notamment terre rare, et/ou d'un métal choisi dans les groupes IIA, IVA, VIIA, VIII, IB, IIB, IIIB et IVB), en suspension dans la phase organique;
- au moins un agent amphiphile.

La phase organique peut être un hydrocarbure, plus particulièrement apolaire.

A titre d'exemple de phase organique, on peut citer les hydrocarbures aliphatiques comme l'hexane, l'heptane, l'octane, le nonane, les hydrocarbures cycloaliphatiques inertes tels que le cyclohexane, le cyclopentane, le cyclohéptané, les hydrocarbures aromatiques tels que le benzène, le toluène, l'éthylbenzène, les xylènes, les naphtènes liquides. Conviennent également les coupes pétrolières du type Isopar ou Solvesso (marques déposées par la Société EXXON), notamment Solvesso 100 qui contient essentiellement un mélange de méthyléthyl- et triméthyl-benzène, le Solvesso 150 qui renferme un mélange d'alkylbenzènes en particulier de diméthylbenzène est de tétraméthylbenzène et l'Isopar qui contient essentiellement des hydrocarbures iso- et cyclo-paraffiniques en C-11 et C-12. On peut aussi citer, comme autres coupes pétrolières, celles de type Petrolink^{®} de la société Petrolink ou de type Isane^{®} de la société Total.

On peut mettre en oeuvre également pour la phase organique des hydrocarbures chlorés tels que le chloro- ou le dichloro-benzène, le chlorotoluène. Les éthers ainsi que les cétones aliphatiques et cycloaliphatiques comme par exemple l'éther de diisopropy le, l'éther de dibutyle, la méthyléthylcétone, la méthylisobutylcétone, la diisobutylcétone, l'oxyde de mésityle, peuvent être envisagés.

Les esters peuvent être envisagés, mais ils présentent l'inconvénient de risquer d'être hydrolysés. On peut citer comme esters susceptibles d'être utilisés ceux issus de la réaction d'acides avec des alcools en C1 à C8 et notamment les palmitates d'alcools secondaires tel l'isopropanol. On peut mentionner l'acétate de butyle à titre d'exemple.

Bien entendu, la phase organique peut être à base d'un mélange de deux ou plusieurs hydrocarbures ou composés du type décrit ci-dessus.

Par ailleurs, les dispersions colloïdales peuvent comprendre un agent amphiphile.

Cet agent amphiphile est, au moins en partie, en interaction, soit par greffage, soit par liaison électrostatique, avec les particules du composé de l'additif, notamment un composé de terre rare et/ou du fer.

Cet agent peut être plus particulièrement un acide.

L'acide est plus particulièrement choisi parmi les acides organiques qui comportent au moins 6 atomes de carbone, encore plus particulièrement de 10 à 60 atomes de carbone, de préférence de 10 à 50 atomes de carbone et encore plus préférentiellement de 10 à 25 atomes de carbone.

Ces acides peuvent être linéaires ou ramifiés. Ils peuvent être des acides aryliques, aliphatiques ou arylaliphatiques, portant éventuellement d'autres fonctions à condition que ces fonctions soient stables dans les milieux où l'on désire utiliser les dispersions. Ainsi, on peut mettre en oeuvre par exemple des acides carboxyliques aliphatiques, des acides sulfoniques aliphatiques, des acides phosphoniques aliphatiques, des acides alkylarylsulfoniques et des acides alkylarylphosphoniques possédant environ de 10 à environ de 40 atomes de carbone, qu'ils soient naturels où synthétiques. Il est bien entendu possible d'utiliser les acides en mélange.

On peut aussi utiliser des acides carboxyliques dont la chaîne carbonée porte des fonctions cétoniques comme les acides pyruviques substitués en alpha de la fonction cétone. Cela peut être également des acides alpha-halogéno carboxyliques ou des acides alpha-hydroxycarboxyliques. La chaîne rattachée au groupe carboxylique peut porter des insaturations. La chaîne peut être interrompue par des fonctions éther ou ester à condition de ne pas trop altérer la lipophilicité de la chaîne porteuse du groupe carboxylique.

A titre d'exemple, on peut citer les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène sulfonique, l'acide toluène phosphonique, l'acide lauryl sulfonique, l'acide lauryl phosphonique, l'acide palmityl sulfonique, et l'acide palmityl phosphonique.

La quantité de l'agent amphiphile présent dans la dispersion peut être définie par le rapport molaire r :
r = nombre de mole d'agent amphiphile/nombre de mole de composé E
E désignant ici l'additif comme la ou les terres rares, le fer ou l'ensemble terre(s) rare(s) et fer par exemple.

Ce rapport molaire peut être compris 0,2 et 1, de préférence entre 0,4 et 0,8.

Les dispersions colloïdales peuvent se présenter selon différents modes de réalisation qui vont être décrits plus précisément ci-dessous et pour lesquels on pourra se référer à l'ensemble de la description des demandes de brevet qui sont mentionnées ci-après.

Un premier mode de réalisation correspond à la dispersion décrite dans EP 671205. Cette dispersion comporte des particules d'oxyde de cérium, un composé acide amphiphile et une phase organique, du type de ceux décrits ci-dessus, et elle est caractérisée par le fait que les particules ont un d90 au plus égal à 200 nanomètres. La dispersion présente en outre au moins une des caractéristiques suivantes: (i) les particules d'oxyde de cérium sont sous forme d'agglomérats de cristallites dont le d80, avantageusement le d90, mesuré par comptage photométrique (microscopie électronique par transmission à haute résolution) est au plus égal à 5 nanomètres, quatre-vingt-dix pour cent (en masse) des agglomérats comportant de 1 à 5, de préférence de 1 à 3 cristallites, (ii) le composé acide amphiphile comporte au moins un acide de 11 à 50 atomes de carbone, présentant au moins une ramification en alpha, beta, gamma ou delta de l'atome porteur de l'hydrogène acide.

Un autre mode de réalisation correspond à la dispersion décrite dans WO 97/19022 qui concerne des dispersions colloïdales de cérium ainsi que des dispersions colloïdales d'un composé mixte de cérium et d'un métal choisi dans les groupes IVA, VIIA, VIII, IB, IIB, IIIB et IVB de la classification périodique. Ce métal pouvant être le fer notamment. Les dispersions décrites dans WO 97/19022 comportent des particules, un composé acide amphiphile et une phase organique comme décrits ci-dessus, et elles sont caractérisées par le fait que les particules sont obtenues par un procédé comportant les étapes ci-après : a) on prépare une solution comprenant au moins un sel soluble, le plus souvent un acétate et/ou un chlorure, de cérium et, éventuellement de l'autre métal; b) on met en contact la solution avec un milieu basique et on maintient le mélange réactionnel ainsi formé à un pH basique; c) on récupère le précipité formé par atomisation ou lyophilisation.

On peut encore mentionner comme dispersions colloïdales utilisables des dispersions de terre rare mais aussi d'un composé mixte d'un métal choisi dans les groupes IIA, IVA, VIIA, VIII, IB, IIB, IIIB et IVB et d'une terre rare, qui sont décrites dans WO 01/10545. Ces dispersions colloïdales organiques comportent des particules d'un composé de terre rare et, éventuellement, d'un composé du métal précité dans une proportion en terre rare qui est de préférence d'au moins 10 %, plus particulièrement d'au moins 20 %, et encore plus particulièrement d'au moins 50 %, en mole par rapport au nombre de mole total d'éléments métal + terre rare exprimés en oxyde. La terre rare peut être plus particulièrement le cérium et le métal plus particulièrement le fer. Ces dispersions comportent au moins un acide de préférence amphiphile et au moins un diluant, de préférence apolaire, ceux-ci étant du type décrit plus haut. Ces dispersions sont telles qu'au moins 90 % des particules sont monocristallines. Les particules peuvent présenter en outre un d5o compris entre 1 et 5 nm, de préférence entre 2 et 3 nm.

On peut mentionner comme autre mode de réalisation la dispersion décrite dans la description de la demande de brevet WO 03/053560. Les caractéristiques de cette dispersion vont être rappelées ci-dessous.

Les particules de cette dispersion sont à base d'un composé du fer qui est amorphe. Ce caractère amorphe peut être mis en évidence par analyse RX, les diagrammes RX obtenus ne montrent en effet dans ce cas aucun pic significatif.

Selon une variante de cette dispersion, au moins 85%, plus particulièrement au moins 90% et encore plus particulièrement au moins 95% des particules sont dès particules primaires. On entend par particule primaire une particule qui est parfaitement individualisée et qui n'est pas agrégée avec une autre ou plusieurs autres particules. Cette caractéristique peut être mise en évidence en examinant la dispersion par microscopie électronique à transmission (MET).

On peut aussi utiliser la technique de cryo-MET pour déterminer l'état d'agrégation des particules élémentaires. Elle permet d'observer par MET des échantillons maintenus congelés dans leur milieu naturel qui est soit de l'eau soit des diluants organiques tels que les solvants aromatiques ou aliphatiques comme par exemple le Solvesso et l'Isopar ou bien certains alcools tels que l'éthanol.

La congélation s'effectue sur des films minces d'environ 50 nm à 100 nm d'épaisseur soit dans l'éthane liquide pour les échantillons aqueux soit dans l'azote liquide pour les autres.

Par cryo-MET l'état de dispersion des particules est bien préservé et représentatif de celui présent dans le milieu réel.

Les particules de cette même dispersion colloïdale peuvent présentent une granulométrie fine. En effet, elles possèdent un d50 compris entre 1 nm et 5 nm, plus particulièrement entre 3 nm et 4 nm.

Généralement et à titre d'exemple seulement, la concentration de la dispersion en fer, est comprise entre 1 et 40 % en poids d'oxyde de fer Fe₂O₃ par rapport au poids total de la dispersion.

On peut aussi mentionner les dispersions décrites dans WO 2008/116550 à base de particules de fer, amorphe ou de préférence cristallisé, et contenant un acide dicarboxylique à substitution hydrocarboné ayant de 8 à 200 atomes de carbone comme un acide succinique à substitution hydrocarboné.

### Les autres additifs

Les carburants peuvent contenir par ailleurs d'autres types connus d'additifs, différents des FBC et qui ont une fonction autre qu'une fonction catalytique. Ces additifs permettent l'amélioration de la distribution du carburant dans le moteur et/ou l'amélioration des performances du fonctionnement du moteur et/ou encore l'amélioration de la stabilité du fonctionnement du moteur.

Parmi les additifs d'amélioration de la distribution de carburant dans le moteur, on trouve par exemple les additifs antimousse. Certains carburants diesel ont tendance à mousser lorsqu'ils sont pompés ce qui vient perturber le remplissage du réservoir à carburant. Des additifs de type organosilicones utilisés à des concentrations de l'ordre de 10 ppm au moins peuvent réduire la formation de mousse.

D'autres additifs sont par exemple des additifs dégivrants. L'eau libre des gazoles givre en effet à basse température. Les cristaux de glace résultant peuvent alors boucher des lignes du circuit de carburant ou les filtres de carburant et bloquer le passage de celui-ci. Des alcools de poids moléculaire bas ou glycols peuvent alors être ajoutés au carburant pour prévenir la formation de cette glace.

D'autres additifs sont ceux améliorant le fonctionnement du moteur à froid. La plupart de ces additifs sont des polymères qui réagissent avec les cristaux que forme le carburant quand ce dernier est refroidi en dessous de son point de trouble. Ces polymères atténuent l'effet des cristaux sur le débit du carburant en modifiant leur dimension, leur forme et/ou leur degré d'agglomération. Ces additifs permettent de réduire la température à laquelle le carburant se trouble ou se fige. Des additifs d'amélioration des propriétés à froid typiques sont les copolymères estérifiés de l'anhydride maléique et du styrène et /ou des copolymères de l'éthylène et de l'acétate de vinyle.

Des additifs d'écoulement peuvent également être utilisés. Ces additifs d'écoulement comprennent par exemple des polymères de hauts poids moléculaires qui réduisent la turbulence dans les fluides et peuvent augmenter le débit de 20 à 40%. Ces additifs sont utilisés typiquement à des concentrations en dessous de 15 ppm.

Des additifs inhibiteurs de corrosion peuvent également être utilisés. Ces inhibiteurs de corrosion sont des composés qui s'attachent aux surfaces du métal et forment une barrière qui prévient l'attaque par des agents corrosifs. De tels additifs sont particulièrement intéressants dans le cas où le carburant contient une fraction facilement oxydable comme une fraction de biofuel comme un ester d'huile végétale, voire une huile végétale. Ils sont généralement utilisés à hauteur de 5 ppm à 15 ppm dans le carburant.

Des additifs d'amélioration des performances de fonctionnement des moteurs peuvent également être utilisés.

Cette classe d'additifs permet en effet d'améliorer les performances de fonctionnement d'un moteur, mais les effets des différents additifs de cette classe, sont appréciés pour des délais différents. Tout avantage fourni par un additif procétane par exemple est immédiat, alors que les effets bénéfiques des additifs de type détergent ou des additifs d'amélioration du pouvoir lubrifiant sont vus à plus long terme, c'est à dire souvent mesurés après quelques dizaines de milliers de kilomètres parcourus par le véhicule.

Ainsi, par exemple, des additifs de type procétane permettent de réduire le bruit de la combustion dans les cylindres ainsi que l'émission des fumées. L'avantage de l'utilisation d'un tel additif varie selon la conception du moteur et les cartographies moteur utilisées. Les additifs procétane sont généralement à base de nitrate organique comme le 2-éthylhexyl-nitrate (EHN). L'EHN est instable thermiquement et se décompose aux hautes températures dans la chambre de combustion du moteur. Ces produits de combustion aident la combustion du moteur et donc raccourcissent la période du délai d'auto-inflammation du carburant. L'augmentation de l'indice de cétane dans le carburant pour une concentration donnée d'EHN varie d'un carburant à un autre, notamment en fonction de l'indice de cétane du carburant. L'EHN est usuellement utilisé dans une gamme de concentration variant de 0,05% en masse à 0,4% en masse et permet d'augmenter de 3 à 8 points l'indice de cétane du carburant. D'autres nitrates d'alkyl ou nitrates d'éther et quelques composés nitreux, sont également des additifs de type procétane possibles. Le di-tertiaire butyl peroxyde a été introduit récemment sur le marché.

Des additifs détergents peuvent également être utilisés. Le carburant peut former en effet des dépôts dans le circuit carburant, notamment au niveau des injecteurs haute pression à carburant et tout particulièrement au niveau des trous des injecteurs. L'ampleur de la formation du dépôt varie avec la conception du moteur, notamment les caractéristiques des injecteurs, la composition du carburant et la composition du lubrifiant. Notamment les carburants qui contiennent des composants instables, comme les esters d'acide gras ou plus généralement les biofuels, ont tendance à former plus de dépôts que les carburants d'origine fossile qui n'en contiennent pas. Ces détergents sont aussi efficaces pour réduire l'impact négatif de la présence de composés métalliques dans le carburant comme le Zn ou le Cu. Ces composés peuvent provenir d'une contamination par exemple du système de distribution du carburant ou encore être des traces de composés provenant du procédé de synthèse des esters d'acide gras.

Les dépôts excessifs peuvent modifier l'aérodynamique par exemple du jet de carburant de l'injecteur, laquelle à son tour peut entraver le mélange air-carburant. Dans certains cas, il en résulte une surconsommation de carburant, une perte de puissance du moteur et des émissions de polluants augmentées.

Les additifs détergents (polyisobutène succinimine amide ou amine (PIBSA), polymères sans cendre, dérivés d'alkylphénols, amides d'acides gras) peuvent nettoyer l'injecteur et/ou laisser propres les injecteurs. Ces additifs sont composés d'un groupe polaire qui se lie aux dépôts et/ou aux précurseurs du dépôt et d'un groupe apolaire qui se dissout dans le carburant. Les additifs détergents dissolvent les dépôts déjà formés et réduisent la formation des précurseurs de dépôt, afin d'éviter la formation de nouveaux dépôts.

De nouveaux détergents sont particulièrement efficaces à bas dosage, typiquement moins de 150 ppm poids dans le carburant, voire moins de 100 ppm. On pourra se référer à ce sujet à la description de WO 2010/150040. Les détergents décrits dans cette demande de brevet se composent d'un sel d'ammonium quaternaire et éventuellement d'un compose oxygéné. Le sel d'ammonium quaternaire peut comprendre le produit de réaction de : (i) au moins un composé comprenant: (a) le produit de condensation d'un agent acylant substitué par un hydrocarbyle et d'un composé ayant un atome d'oxygène ou d'azote capable de condenser l'agent acylant et où le produit de condensation a au moins un groupe amine tertiaire; (b) une amine substituée par un polyalcène ayant au moins un groupe amine tertiaire; ou (c) un produit de réaction de Mannich ayant au moins un groupe amine tertiaire et où le produit de réaction de Mannich est dérivé d'un phénol substitué par un hydrocarbyle, d'un aldéhyde, et d'une amine; et (ii) un agent quaternisant capable de convertir le groupe amine tertiaire du composé (i) en azote quaternaire.

Le sel ammonium quaternaire peut aussi comprendre le produit de réaction de : (i) la réaction d'un agent acylant substitué par un hydrocarbyle et d'un composé ayant un atome d'oxygène ou d'azote capable de se condenser avec l'agent acylant et comprenant en outre au moins un groupe amine tertiaire et (ii) un agent quaternisant comportant des dialkyle sulfates, des benzyl halogénures, des carbonates substitués par des hydrocarbyles, des époxydes hydrocarbyles éventuellement en combinaison avec un acide, ou leurs mélanges.

L'agent acylant substitué par un hydrocarbyle peut être l'anhydride succinique de polyisobutylène et le composé ayant un atome d'oxygène ou d'azote capable de se condenser avec ledit agent acylant peut être la diméthylaminopropylamine, le N-méthyl-1,3-diaminopropane, la N, N-diméthyl-aminopropylamine, la N, N-diéthyl-aminopropylamine, la N, N-diméthyl-aminoéthylamine, la diéthylènetriamine, la dipropylènetriamine, la dibutylènetriamine, la triéthylènetetraamine, la tétraéthylènepentaamine, la pentaéthylène-hexaamine, l'hexaméthylènetétraamine, et la bis(hexaméthylène) triamine.

On peut citer comme exemple des sels d'ammonium quaternaire décrits précédemment ceux dérivés de succinimide et préparés à partir de diméthylaminopropylamine succinimide, 2-éthylhexyl alcool et acide acétique. Le détergent oxygéné peut être de type acide polyisobutylène comme ceux obtenus par réaction entre un polyisobutylène vinylidène de masse molaire environ 1000 et l'anhydride maléique puis hydrolyse. Ces deux types de molécules détergentes peuvent être associés dans différentes proportions.

On notera ici un mode de réalisation particulier de l'invention dans lequel l'additif est une combinaison (1) d'une dispersion colloïdale de particules qui comprend une phase organique et au moins un agent amphiphile du type qui a été décrit ci-dessus et (2) d'un détergent à base d'un sel d'ammonium quaternaire du type décrit dans la demande de brevet WO 2010/150040 mentionnée plus haut.

Pour cette combinaison de ce mode de réalisation spécifique ce qui a été décrit plus haut notamment au sujet de la demande WO 2010/150040 s'applique ici pour le détergent (2). Par ailleurs la dispersion colloïdale (1) peut être plus particulièrement une de celles décrites au sujet des demandes de brevet EP 671205, WO 01/10545 et WO 03/053560 mentionnées plus haut. Dans ces dispersions colloïdales les particules peuvent être plus particulièrement à base de cérium et/ou de fer.

Des additifs d'amélioration du pouvoir lubrifiant peuvent également être utilisés pour éviter le grippage des pompes à haute pression notamment et des injecteurs, à cause du mauvais pouvoir lubrifiant des carburants. Ils contiennent un groupe polaire qui est attiré par les surfaces métalliques pour former un film de protection à la surface. Le film agit comme une huile lorsque deux surfaces métalliques entrent en contact. Ces additifs sont couramment composés d'acides carboxyliques gras ou d'esters. Les acides carboxyliques gras sont utilisés dans la gamme de concentration de 10 ppm à 50 ppm. Les esters sont généralement utilisés à hauteur de 50 ppm à 250 ppm poids dans le carburant.

Des additifs inhibiteurs de fumées peuvent également être utilisés. Quelques composés organométalliques agissent comme catalyseurs de combustion. On peut citer par exemple l'efficacité des additifs métalliques à base de Fer, comme les ferrocène. Certains composés à base de manganèse peuvent aussi réduire les émissions de fumées noires qui résultent d'une combustion incomplète. Cependant, ces composés métalliques à base de manganèse peuvent être interdits dans certains pays en raison de la toxicité potentielle.

Des additifs réduisant les pertes par friction permettent de réduire les frottements dans le circuit carburant entraînant ainsi un gain en matière de consommation de carburant. Sur certains véhicules, des gains en consommation supérieurs à 4% ont été constatés lors d'essais. Ces additifs sont également appelés additifs FM pour « Friction Modifier » ou additifs « d'extrême pression ».

De même, des additifs d'amélioration de la stabilité de fonctionnement des moteurs peuvent être envisagés. L'instabilité des carburants entraîne la formation de gommes qui participent à l'encrassement des injecteurs, au colmatage du filtre à carburant et à l'encrassement des pompes et du système d'injection. Ces additifs ont des performances qui sont conditionnées par leur utilisation dans un carburant approprié ou non.

Des additifs de type antioxydants peuvent également être utilisés. Un mode d'instabilité du carburant est l'oxydation. L'oxygène dans la petite quantité d'air dissoute dans le carburant attaque des composés réactifs présents dans le carburant. L'oxydation est le résultat d'une succession de mécanismes complexes. Les antioxydants travaillent en interrompant ces mécanismes. Les phénols ramifiés encombrés, comme le diterbutylphénol ou dérivés et certaines amines, telles que la phénylènediamine, sont les antioxydants les plus communément rencontrés. Ils sont en effet utilisés dans une gamme de concentration de 10 ppm à 80 ppm.

Des additifs stabilisateurs peuvent également être employés. Les réactions acide-base sont un autre mode d'instabilité du carburant. Les additifs stabilisateurs qui préviennent ces réactions sont des composés basiques forts à base d'amine et sont utilisés dans la gamme de concentration de 50 ppm à 150 ppm. Ils réagissent avec les acides faibles pour former des produits qui restent dissous dans le carburant mais qui ne peuvent plus réagir. Certains détergents comme les détergents azotés précédemment décrits peuvent aussi être efficaces pour neutraliser les acides faibles présents dans le carburant.

Des additifs désactivateurs de métaux peuvent également être envisagés. La présence des métaux à l'état de trace (Cu et Zn par exemple) suffit pour accélérer le processus de dégradation du carburant. Les désactivateurs, tels que les triazole aromatiques ou leurs dérivés, neutralisent leurs effets catalytiques. Ils sont utilisés dans la gamme de concentration de 1 ppm à 15 ppm.

Enfin, des additifs dispersants peuvent également être prévus. Ces additifs dispersants ne préviennent pas une réaction de l'instabilité du carburant, mais ils dispersent les particules formées et préviennent l'agglomération de particules assez grosses pour encrasser, voire boucher le filtre à carburant ou les injecteurs. Les additifs dispersants sont utilisés dans une gamme de concentration de 15 ppm à 100 ppm.

Le dispositif selon l'invention permet d'additiver au carburant un ou plusieurs des additifs qui viennent d'être décrits ci-dessus, FBC ou autres. Le choix des additifs est fait par l'homme du métier en tenant compte par exemple, pour la zone géographique dans laquelle le véhicule sera commercialisé, de la qualité du carburant disponible dans cette zone géographique, de la présence éventuelle de biocarburants dans cette zone ou encore des conditions atmosphériques que l'on y rencontre.

Selon un mode de réalisation particulier l'additif est une combinaison d'un additif détergent et d'un additif de lubrification.

Le choix des additifs peut se faire aussi en regard de la réglementation régulant les niveaux d'émissions de polluants maximum dans cette même zone. Dans les zones où le FAP est requis pour respecter la norme antipollution sur les émissions de suies, on incorporera avantageusement un additif FBC pour aider à régénérer le FAP. On peut aussi utiliser avantageusement un FBC avec un filtre catalysé, c'est-à-dire un filtre contenant un catalyseur d'oxydation des suies et/ou d'oxydation des gaz imbrûlés (tels que CO ou les hydrocarbures) et/ou d'oxydation des suies localisé dans le FAP. Un système du type CRT peut être localisé aussi en amont du FAP.

Le choix de la composition de l'additif peut se faire également en fonction de la technologie moteur du véhicule comme la nature et le design des injecteurs haute pression à carburant, le type de filtre à gazole ou encore la pression du système d'injection Common Rail Système ou Rampe commune d'injection alimentant chacun des injecteurs par le carburant pressurisé.

Le choix des additifs peut aussi se faire selon la cartographie des émissions polluantes du moteur.

Dans le cas où le véhicule est équipé d'un dispositif pour réduire les émissions de suies (FAP, CSF, CRT...), on aura intérêt à introduire un catalyseur FBC dans l'additif. La concentration en élément métallique FBC actif dans l'additif doit être calculée de façon à ce que le dispositif permette d'ajouter au carburant une quantité de métal suffisante pour permettre un gain sur l'efficacité de régénération du FAP. Ce gain peut se manifester par un ralentissement de la vitesse de chargement en suies du FAP ou encore réduction de l'augmentation de sa contre pression avec le temps. Cela peut aussi se manifester par une réduction de la température de démarrage de la combustion ou par une réduction de la température de balance point du dispositif FAP, le balance-point étant défini comme la température à laquelle les suies sont brûlées à une vitesse équivalente à l'émission des suies par le moteur. Cela peut aussi se manifester par une régénération du FAP plus rapide et/ou à plus basse température. A titre d'exemple, pour un véhicule particulier équipé d'un moteur 2L à injection directe haute pression et fonctionnant avec un FBC à base de fer, le bénéfice est observé si la concentration en fer dans le carburant est comprise entre 1 ppm et 50 ppm, plus particulièrement entre 2 et 20 ppm, cette quantité étant exprimée par poids de fer métal par rapport au poids du carburant.

Dans le cas d'un véhicule équipé d'un FAP, on aura avantage à associer à ce FBC au moins un additif de performance carburant comme un détergent. La demande de brevets WO 2010/150040 décrit une association avantageuse entre un additif FBC à base de fer et un détergent azoté. Dans ce cas le ratio entre les deux constituants doit être tel que l'on délivre la quantité requise de FBC et la quantité requise de détergent.

Dans le cas d'un véhicule équipé d'un FAP, on aura avantage également à associer au FBC plusieurs additifs de performance carburant, notamment lorsque le véhicule est commercialisé dans une zone géographique où le carburant est de qualité variable et/ou médiocre. Des associations comme un FBC, un ou plusieurs détergents, un additif de lubrification et un inhibiteur de corrosion peuvent être particulièrement avantageuses pour d'une part aider à régénérer le FAP dans toutes les conditions notamment de roulage urbain et d'autres part améliorer la distribution du carburant dans le moteur, les performances du moteur et la stabilité de fonctionnement du moteur. L'additif contiendra des proportions entre chacun des éléments de façon à ce que l'on délivre dans le carburant en plus de l'additif FBC, de l'ordre de 20 à 150 ppm de détergent, de l'ordre de 10 à 80 ppm d'additif de lubrification et de l'ordre de 20 à 150 ppm d'additif inhibiteur de corrosion.

Selon le cas, ces taux peuvent être modulés (augmentés ou réduits) notamment selon la qualité du carburant et/ou la technologie du moteur (type d'injecteurs haute pression, pression d'injection par exemple).

Dans le cas d'un véhiculé non équipé de FAP, différents types d'associations d'additif carburant peuvent être envisagés comme celle associant un ou plusieurs détergents à un additif de lubrification et un inhibiteur de corrosion. L'additif contiendra des proportions entre chacun des éléments de façon à ce que l'on délivre dans le carburant de l'ordre de 20 à 150 ppm de détergent, de l'ordre de 10 à 80 ppm d'additif de lubrification et de l'ordre de 20 à 150 ppm d'additif inhibiteur de corrosion. Là aussi, ces taux peuvent être modulés (augmentés ou réduits) notamment selon la qualité du carburant et/ou la technologie du moteur (type d'injecteurs haute pression, pression d'injection par exemple).

Dans certains cas, notamment en présence de carburants contenant des fractions facilement oxydables comme les biofuels comme les acides gras d'esters méthyliques, on pourra avantageusement associer un additif antioxydant.

## Revendications

1. Dispositif de distribution d'un additif liquide dans un circuit (1) de circulation de carburant pour moteur à combustion interne, ledit circuit assurant dans un véhicule la circulation du carburant entre l'intérieur d'un réservoir (2) de carburant et le moteur, ledit dispositif comportant:
- un orifice (13) d'entrée de carburant,
- un orifice (14) de sortie de carburant,
- un orifice (17) de distribution d'additif qui est distinct des orifices d'entrée et de sortie de carburant, l'orifice (17) de distribution étant défini à une première extrémité d'un canal (16) de distribution,
- une enceinte d'additif (22) communiquant avec le circuit (1) de circulation de carburant,
- un réservoir (12) d'additif liquide permettant de diffuser un additif dans le circuit (1) de circulation de carburant au moyen du canal (16) de distribution,
**caractérisé en ce qu'**il comporte :
- au moins une paroi (32, 33, 34) mobile et étanche entre ladite enceinte d'additif (22) et le réservoir (12) d'additif assurant d'une part une séparation étanche et d'autre part maintenant une pression identique entre l'additif dans le réservoir (12) d'additif et le carburant dans l'enceinte d'additif (22),
- un moyen générateur d'une dépression entre l'orifice (17) de distribution d'additif et. l'orifice d'entrée (13) ou de sortie (14) de carburant, et
- une tête de diffusion (10) qui comporte l'orifice (13) d'entrée de carburant, l'orifice (14) de sortie de carburant, l'orifice (17) de distribution, le canal (16) de distribution et ledit moyen générateur de dépression, sachant que l'orifice (17) de distribution d'additif est agencé au niveau dudit moyen générateur d'une dépression qui se présente sous la forme d'un diaphragme ou d'un venturi (21),
et **en ce que** l'enceinte d'additif (22), le réservoir (12) d'additif et ladite paroi mobile (32, 33, 34) font partie d'une cartouche remplaçable (11) montée de manière amovible par rapport à la tête de diffusion (20), le canal (16) de distribution ayant une deuxième extrémité permettant le raccordement étanche au réservoir (22) d'additif.

2. Dispositif de distribution d'un additif liquide selon la revendication 1 **caractérisé en ce que** le réservoir (12) d'additif se présente sous la forme d'une poche souple (32) et **en ce que** ladite poche souple (32) constitue la paroi mobile et étanche.

3. Dispositif de distribution d'un additif liquide selon la revendication 1 **caractérisé en ce que** la paroi mobile et étanche est réalisée par une membrane (33) ou un piston (34).

4. Dispositif de distribution d'un additif liquide selon l'une des revendications 1 à 3 **caractérisé en ce qu'**il comporte, dans la tête de diffusion (10), un moyen (15) d'obturation totale ou partielle du canal (16) de distribution de l'additif, le canal (16) de distribution de l'additif assurant le passage de l'additif liquide du réservoir (12) vers l'orifice (17) de distribution d'additif.

5. Dispositif de distribution d'un additif liquide selon la revendication 4 **caractérisé en ce que** le moyen (15) d'obturation du canal de distribution de l'additif est un moyen électromécanique.

6. Dispositif de distribution d'un additif liquide selon l'une des revendications 1 à 5 **caractérisé en ce qu'**il comporte un dispositif de filtration du carburant comportant au moins un élément filtrant (25) placé dans la cartouche remplaçable (11).

7. Dispositif de distribution d'un additif liquide selon la revendication 6 **caractérisé en ce que** l'élément filtrant (25) est de forme annulaire et le réservoir d'additif (12) est disposé selon l'une parmi les possibilités suivantes :
- de manière concentrique à l'intérieur dudit élément filtrant (25) ;
- de manière concentrique à l'extérieur de l'élément filtrant (25) ;
- de façon à ce que l'élément filtrant (25) et le réservoir d'additif (12) soient superposés axialement.

8. Dispositif de distribution d'un additif liquide selon la revendication 6 ou 7 **caractérisé en ce que** l'élément filtrant (25) est traversé par le carburant, délimitant un coté amont (28), situé entre le réservoir (2) de carburant et l'élément filtrant (25), où circule le carburant non filtré et un coté aval (29), disposé entre l'élément filtrant (25) et le moteur à combustion, où circule le carburant filtré et **en ce que** l'additif est diffusé du coté amont (28).

9. Dispositif de distribution d'un additif liquide selon la revendication 6 ou 7 **caractérisé en ce que** l'élément filtrant (25) est traversé par le carburant, délimitant un coté amont (28), situé entre le réservoir (2) de carburant et l'élément filtrant (25), où circule le carburant non filtré et un coté aval (29), disposé entre l'élément filtrant (25) et le moteur à combustion interne, où circule le carburant filtré et **en ce que** l'additif est diffusé du coté aval (29).

10. Dispositif de distribution d'un additif liquide selon l'une quelconque des revendications 1 à 7 **caractérisé en ce que** l'additif est diffusé dans la ligne de retour (6) de carburant du moteur à combustion interne, en aval du système d'injection et vers le réservoir (2) de carburant.

11. Dispositif de distribution d'un additif liquide selon l'une des revendications 6 à 10 **caractérisé en ce que** la paroi mobile (32, 33, 34) est disposée entre le réservoir d'additif (12) et le coté amont (28) de l'élément filtrant (25).

12. Dispositif de distribution d'un additif liquide selon l'une des revendications 6 à 10 **caractérisé en ce que** la paroi mobile (32, 33, 34) est disposée entre le réservoir d'additif (12) et le coté aval (29) de l'élément filtrant (25).

13. Dispositif de distribution d'un additif liquide selon l'une quelconque des revendications précédentes, dans lequel l'enceinte d'additif (22) est disposée dans le réservoir (2) de carburant du véhicule.

14. Dispositif de distribution d'un additif liquide selon l'une quelconque des revendications précédentes, dans lequel ledit circuit (1) assure également la circulation retour du carburant du moteur jusqu'à l'intérieur dudit réservoir (2) de carburant.

15. Dispositif de distribution d'un additif liquide selon l'une quelconque des revendications précédentes **caractérisé en ce que** l'additif est un additif de régénération des filtres à particules à base d'une terre rare et/ou d'un métal choisi dans les groupes IIA, IVA, VIIA, VIII, IB, IIB, IIIB et IVB de la classification périodique, l'additif se présentant de préférence sous forme d'une dispersion colloïdale, les particules de la dispersion colloïdale étant de préférence à base de cérium et/ou de fer.

16. Dispositif de distribution d'un additif liquide selon la revendication 15 **caractérisé en ce que** l'additif est une combinaison d'une dispersion colloïdale de particules qui comprend une phase organique et au moins un agent amphiphile et d'un détergent à base d'un sel d'ammonium quaternaire.

17. Dispositif de distribution d'un additif liquide selon l'une quelconque des revendications précédentes, **caractérisé en ce que** l'additif est une combinaison d'un additif détergent et d'un additif de lubrification.

## Patentansprüche

1. Vorrichtung zum Verteilen eines flüssigen Zusatzstoffes in einem Treibstoffkreislauf (1) für einen Verbrennungsmotors, wobei der Treibstoffkreislauf in einem Fahrzeug die Zirkulation des Treibstoffs zwischen dem Innern eines Treibstofftanks (2) und dem Motor sicherstellt, und wobei die Vorrichtung das Folgende umfasst:
- Eine Einlassöffnung (13) für Treibstoff,
- Eine Auslassöffnung (14) für Treibstoff,
- Eine von der Einlassöffnung für Treibstoff und von der Auslassöffnung für Treibstoff verschiedene Verteileröffnung (17) für Zusatzstoff, die an einem ersten Ende eines Verteilerkanals (16) ausgebildet ist,
- Einen Zusatzstoffbehälter (22), der mit dem Treibstoffkreislauf (1) kommuniziert,
- Einen Tank (12) für flüssigen Zusatzstoff, der es ermöglicht, einen Zusatzstoff mittels des Verteilerkanals (16) in dem Treibstoffkreislauf (1) zu verteilen,
**dadurch gekennzeichnet, dass** sie das Folgende umfasst:
- Mindestens eine bewegliche und dichte Wand (32, 33, 34) zwischen dem Zusatzstoffbehälter (22) und dem Tank (12) für Zusatzstoff, die einerseits eine dichte Trennung sicherstellt und andererseits einen zwischen dem Zusatzstoff in dem Tank (12) für Zusatzstoff und dem Treibstoff in dem Zusatzstoffbehälter (22) identischen Druck aufrecht erhält,
- Ein Mittel zum Erzeugen eines Unterdrucks zwischen der Verteileröffnung (17) und der Einlassöffnung (13) oder der Auslassöffnung (14) für Treibstoff und
- Einen Verteilerkopf (10), der die Einlassöffnung (13) für Treibstoff, die Auslassöffnung (14) für Treibstoff, die Verteileröffnung (17) für Zusatzstoff, den Verteilerkanal (16) und das Mittel zum Erzeugen eines Unterdrucks umfasst, wobei die Verteileröffnung (17) für Zusatzstoff im Bereich des Mittels zum Erzeugen eines Unterdrucks, welches als Diaphragma oder als Venturirohr (21) ausgeformt ist, angeordnet ist, und dass der Zusatzstoffbehälter (22), der Tank (12) für Zusatzstoff und die bewegliche Wand (32, 33, 34) zu einer austauschbaren Kartusche (11) gehören, die bezüglich des Verteilerkopfes (10) lösbar montiert ist, wobei der Verteilerkanal (16) ein zweites Ende aufweist, das einen dichten Anschluss an den Tank (12) für Zusatzstoff ermöglicht.

2. Vorrichtung zum Verteilen eines flüssigen Zusatzstoffes nach Anspruch 1, **dadurch gekennzeichnet, dass** der Tank (12) für Zusatzstoff als ein flexibler Beutel (32) ausgeformt ist, und dass der flexible Beutel (32) die bewegliche und dichte Wand bildet.

3. Vorrichtung zum Verteilen eines flüssigen Zusatzstoffes nach Anspruch 1, **dadurch gekennzeichnet, dass** die bewegliche und dichte Wand durch eine Membran (33) oder einen Druckkolben (34) realisiert ist.

4. Vorrichtung zum Verteilen eines flüssigen Zusatzstoffes nach einem der Ansprüche 1 bis 3, **dadurch gekennzeichnet, dass** sie innerhalb des Verteilerkopfes (10) ein Mittel (15) zum völligen oder teilweisen Verschließen des Verteilerkanals (16) für Zusatzstoff umfasst, wobei der Verteilerkanal (16) den Durchlass des flüssigen Zusatzstoffes von dem Tank (12) zu der Verteileröffnung (17) für Zusatzstoff sicherstellt.

5. Vorrichtung zum Verteilen eines flüssigen Zusatzstoffes nach Anspruch 4, **dadurch gekennzeichnet, dass** das Mittel (15) zum Verschließen des Verteilerkanals für Zusatzstoff ein elektromechanisches Mittel ist.

6. Vorrichtung zum Verteilen eines flüssigen Zusatzstoffes nach einem der Ansprüche 1 bis 5, **dadurch gekennzeichnet, dass** sie eine Filtriervorrichtung für den Treibstoff umfasst, die mindestens ein Filtrierelement (25) umfasst, das in der austauschbaren Kartusche (11) platziert ist.

7. Vorrichtung zum Verteilen eines flüssigen Zusatzstoffes nach Anspruch 6, **dadurch gekennzeichnet, dass** das Filtrierelement (25) ringförmig ist, und dass der Tank (12) für Zusatzstoff entsprechend einer der folgenden Möglichkeiten angeordnet ist:
- konzentrisch innerhalb des Filtrierelements (25);
- konzentrisch außerhalb des Filtrierelements (25);
- derart, dass das Filtrierelement (25) und der Tank (12) für Zusatzstoff axial aufeinander gestapelt sind.

8. Vorrichtung zum Verteilen eines flüssigen Zusatzstoffes nach Anspruch 6 oder 7, **dadurch gekennzeichnet, dass** das Filtrierelement (25) von dem Treibstoff durchflossen wird, wobei es an eine stromaufwärts befindliche Seite (28), welche sich zwischen dem Treibstofftank (2) und dem Filtrierelement (25) befindet, und in welcher der unfiltrierte Treibstoff strömt, und an eine stromabwärts befindliche Seite (29), welche zwischen dem Filtrierelement (25) und dem Verbrennungsmotor angeordnet ist, und in welcher der filtrierte Treibstoff strömt, angrenzt, und dass der Zusatzstoff von der stromaufwärts befindlichen Seite (28) her verteilt wird.

9. Vorrichtung zum Verteilen eines flüssigen Zusatzstoffes nach Anspruch 6 oder 7, **dadurch gekennzeichnet, dass** das Filtrierelement (25) von dem Treibstoff durchflossen wird, wobei es an eine stromaufwärts befindliche Seite (28), welche sich zwischen dem Treibstofftank (2) und dem Filtrierelement (25) befindet, und in welcher der unfiltrierte Treibstoff strömt, und an eine stromabwärts befindliche Seite (29), welche zwischen dem Filtrierelement (25) und dem Verbrennungsmotor angeordnet ist, und in welcher der filtrierte Treibstoff strömt, angrenzt, und dass der Zusatzstoff von der stromabwärts befindlichen Seite (29) her verteilt wird.

10. Vorrichtung zum Verteilen eines flüssigen Zusatzstoffes nach einem der Ansprüche 1 bis 7, **dadurch gekennzeichnet, dass** der Zusatzstoff in der Rückführleitung (6) für den Treibstoff des Verbrennungsmotors stromabwärts des Einspritzsystems und in Richtung des Treibstofftanks (2) verteilt wird.

11. Vorrichtung zum Verteilen eines flüssigen Zusatzstoffes nach einem der Ansprüche 6 bis 10, **dadurch gekennzeichnet, dass** die bewegliche Wand (32, 33, 34) zwischen dem Tank (12) für Zusatzstoff und der stromaufwärts befindlichen Seite (28) des Filtrierelements (25) angeordnet ist.

12. Vorrichtung zum Verteilen eines flüssigen Zusatzstoffes nach einem der Ansprüche 6-10, **dadurch gekennzeichnet, dass** die bewegliche Wand (32, 33, 34) zwischen dem Tank (12) für Zusatzstoff und der stromabwärts befindlichen Seite (29) des Filtrierelements (25) angeordnet ist.

13. Vorrichtung zum Verteilen eines flüssigen Zusatzstoffes nach einem der vorangehenden Ansprüche, wobei der Zusatzstoffbehälter (22) in dem Treibstofftank (2) des Fahrzeugs angeordnet ist.

14. Vorrichtung zum Verteilen eines flüssigen Zusatzstoffes nach einem der vorangehenden Ansprüche, wobei der Treibstoffkreislauf (1) ferner den Rücklauf des Treibstoffs vom Motor bis zum Innern des Treibstofftanks (2) sicherstellt.

15. Vorrichtung zum Verteilen eines flüssigen Zusatzstoffes nach einem der vorangehenden Ansprüche, **dadurch gekennzeichnet, dass** der Zusatzstoff ein Zusatzstoff für die Regeneration von Partikelfiltern ist, die auf einer seltenen Erde und/oder einem Metalls aus einer der Gruppen IIA, IVA, VIIA, VIII, IB, IIB, IIIB und IVB des Periodensystems basieren, wobei der Zusatzstoff vorzugsweise in Form einer kolloiden Dispersion vorliegt, wobei die Partikel der kolloiden Dispersion vorzugsweise auf Cer und/oder Eisen basieren.

16. Vorrichtung zum Verteilen eines flüssigen Zusatzstoffes nach Anspruch 15, **dadurch gekennzeichnet, dass** er Zusatzstoff eine Kombination aus einer kolloiden Dispersion von Partikeln, die mindestens eine organische Phase und mindestens eine amphiphile Substanz umfasst, und einem Reinigungsmittel auf Basis eines quaternären Ammoniumsalzes ist.

17. Vorrichtung zum Verteilen eines flüssigen Zusatzstoffes nach einem der vorangehenden Ansprüche, **dadurch gekennzeichnet, dass** der Zusatzstoff eine Kombination aus einem Reinigungszusatzstoff und einem Schmierzusatzstoff ist.

## Claims

1. Device for dispensing a liquid additive into a fuel circulation circuit (1) for an internal combustion engine, said circuit assuring in a vehicle the circulation of fuel between the interior of a fuel tank (2) and the engine, said device comprising:
- a fuel inlet (13),
- a fuel outlet (14),
- an additive distribution opening (17) which is distinct from the fuel inlet and fuel outlet, the distribution opening (17) being defined at a first end of a distribution line (16),
- an additive chamber (22) in communication with the fuel circulation circuit (1),
- a reservoir (12) of liquid additive which allows releasing an additive into the fuel circulation circuit (1) by means of the distribution line (16),
**characterized in that** it comprises:
- at least one mobile and fluidtight wall (32, 33, 34) between said additive chamber (22) and the additive reservoir (12) which, on the one hand, provides a fluidtight division, and on the other hand, maintains equal pressure between the additive in the additive reservoir (12) and the fuel in the additive chamber (22),
- a means of generating a negative pressure between the additive distribution opening (17) and the fuel inlet (13) or outlet (14), and
- a distribution head (10) that comprises the fuel inlet (13), the fuel outlet (14), the additive distribution opening (17), the distribution line (16) and said means of generating a negative pressure, the additive distribution opening (17) being arranged at said means of generating a negative pressure which is in the form of a diaphragm or venturi (21),
and **in that** the additive chamber (22), the additive reservoir (12) and said mobile wall (32, 33, 34) are part of a replaceable cartridge (11) detachably mounted on the distribution head (10), the distribution line (16) being provided with a second end for fluidtight connection to the additive reservoir (12).

2. Device for dispensing a liquid additive according to claim 1, wherein the additive reservoir (12) is in the form of a flexible pouch (32) and wherein said flexible pouch (32) constitutes the mobile and fluidtight wall.

3. Device for dispensing a liquid additive according to claim 1, wherein the mobile and fluidtight wall is formed by a membrane (33) or a piston (34).

4. Device for dispensing a liquid additive according to one claims 1 to 3, wherein it comprises in the distribution head (10) a means (15) for completely or partially plugging the additive distribution line (16),
the additive distribution line (16) allowing the liquid additive to pass from the reservoir (12) to the additive distribution opening (17).

5. Device for dispensing a liquid additive according to claim 4, wherein the means (15) of plugging the additive distribution line is an electromechanical means.

6. Device for dispensing a liquid additive according to one of claims 1 to 5, wherein it comprises a fuel filtering device comprising at least one filtering element (25) arranged in a replaceable cartridge (11).

7. Device for dispensing a liquid additive according to claim 6k, wherein the filtering element (25) is annular in shape and the additive reservoir (12) is arranged according to one of the following possibilities:
- concentrically inside said filtering element (25);
- concentrically outside the filtering element (25);
- in such a way that the filtering element (25) and the additive reservoir (12) are axially superimposed.

8. Device for dispensing a liquid additive according to claim 6 or 7, wherein the filtering element (25) is traversed by the fuel, delimiting an upstream side (28) where the unfiltered fuel circulates, located between the fuel tank (2) and the filtering element (25), and a downstream side (29) where the filtered fuel circulates, arranged between the filtering element (25) and the combustion engine, and wherein the additive is released from the upstream side (28).

9. Device for dispensing a liquid additive according to claim 6 or 7, wherein the filtering element (25) is traversed by the fuel, delimiting an upstream side (28) where the unfiltered fuel circulates, located between the fuel tank (2) and the filtering element (25), and a downstream side (29) where the filtered fuel circulates, arranged between the filtering element (25) and the internal combustion engine, and wherein the additive is released from the downstream side (29).

10. Device for dispensing a liquid additive according to one of claims 1 to 7, wherein the additive is released into the fuel return line (6) of the internal combustion engine, downstream from the injection system and towards the fuel tank (2).

11. Device for dispensing a liquid additive according to one of claims 6 to 10, wherein the mobile wall (32, 33, 34) is between the additive reservoir (12) and the upstream side (28) of the filtering element (25).

12. Device for dispensing a liquid additive according to one of claims 6 to 10, wherein the mobile wall (32, 33, 34) is between the additive reservoir (12) and the downstream side (29) of the filtering element (25).

13. Device for dispensing a liquid additive according to one of the above claims, wherein the additive chamber (22) is arranged within the fuel tank (2) of the vehicle.

14. Device for dispensing a liquid additive according to one of the above claims, wherein said circuit (1) also allows the return circulation of fuel from the engine to inside said fuel tank (2).

15. Device for dispensing a liquid additive according to one of the above claims, wherein the additive is a particulate filter regeneration additive based on a rare earth and/or a metal chosen from among the groups IIA, IVA, VIIA, VIII, IB, IIB, IIIB and IVB of the periodic classification, the additive preferably being in the form of a colloidal dispersion, the particles of the colloidal dispersion preferably being cerium- and/or iron-based.

16. Device for dispensing a liquid additive according to claim 15, wherein the additive is a combination of: a colloidal dispersion of particles which comprises an organic phase and at least one amphiphilic agent, and a detergent based on a quaternary ammonium salt.

17. Device for dispensing a liquid additive according to one of the above claims, wherein the additive is a combination of a detergent additive and a lubrication additive.
